# EUROPÄISCHE PATENTSCHRIFT

(11) **EP 1 237 720 B1**
(45) Veröffentlichungstag und Bekanntmachung des Hinweises auf die Patenterteilung: **25.02.2004**
(21) Anmeldenummer: 00981359.3
(22) Anmeldetag: 09.12.2000
(51) Int. Cl.: B32B 27/32, A61J 1/05

(54) **AUTOKLAVIERBARE, PVC-FREIE MEHRSCHICHTFOLIE, INSBESONDERE FÜR DIE VERPACKUNG VON FLÜSSIGEN, MEDIZINISCHEN PRODUKTEN, VERFAHREN ZUR HERSTELLUNG SOWIE VERWENDUNG**
AUTOCLAVABLE PVC-FREE MULTILAYER FILM TO BE ESPECIALLY USED FOR PACKING LIQUID, MEDICINAL PRODUCTS, METHOD FOR PRODUCING THE SAME AND THE USE THEREOF
FILM MULTICOUCHE EXEMPT DE PVC ET POUVANT PASSER EN AUTOCLAVE, EN PARTICULIER POUR LE CONDITIONNEMENT DE PRODUITS MEDICAUX LIQUIDES, PROCEDE DE FABRICATION ET UTILISATION

(30) Priorität: 11.12.1999 DE 19959894
(43) Veröffentlichungstag der Anmeldung: 11.09.2002
(73) Patentinhaber: Fresenius Kabi Deutschland GmbH, 61352 Bad Homburg v.d.H. (DE)
(72) Erfinder: ANDERSSON, Gunnar, S-191 50 Sollentuna (SE); FALKEN, Henrik, S-181 43 Lidingö (SE); HÄUSSLER, Jörg, 61440 Oberusel (DE); RENZ, Marcus, 55257 Budenheim (DE)
(74) Vertreter: Luderschmidt, Schüler & Partner GbR
(86) Internationale Anmeldenummer: PCT/EP2000/012465
(87) Internationale Veröffentlichungsnummer: WO 2001/042009

(56) Entgegenhaltungen:
- EP-A- 0 564 206
- EP-A- 0 600 246
- EP-A- 0 663 422
- EP-A- 0 739 713
- US-A- 4 643 926
- US-A- 5 482 771

## Beschreibung

Die Erfindung bezieht sich auf eine autoklavierbare, PVC-freie Mehrschichtfolie. insbesonders für die Verpackung von flüssigen. medizinischen Produkten. wobei die Folie wenigstens drei Schichten aufweist. nämlich eine Außenschicht (A), eine Innenschicht (I) und eine dazwischen angeordnete Mittelschicht (M), von denen jede zu 60 bis 100 Gewichtsprozent, bezogen auf das Gesamtgewicht der jeweiligen Schicht, aus Polypropylenmaterialien und zu 40 bis 0 Gewichtsprozent aus einem thermoplastischen Elastomer, vorzugsweise aus der Gruppe der Styrolblockcopolymere, besteht. Die Erfindung betrifft desweiteren Verfahren zur Herstellung solcher Mehrschichtfolien sowie die Verwendung von Mehrschichtfolien in Übereinstimmung mit der Erfindung.

Mehrschicht- oder Mehrlagenfolien für die Verpackung von Materialien. insbesondere von medizinischen Flüssigkeiten oder Lösungen. wie Kochsalzlösungen, Aminosäurelösungen, lipophile Emulsionen. Dialyselösungen. Blutersatzlösungen. Blut und dergleichen, sind Legion.

Grundsätzlich sollen Mehrschichtfolien ebenso wie die daraus erhältlichen Verpackungen. etwa Beutel oder ähnliche Behältnisse, einem komplexen Anforderungsprofil genügen. Sie müssen eine hohe Flexibilität besitzen, damit sich gefüllte Beutel allein unter dem Einfluß der Schwerkraft vollständig leeren lassen. Sie sollen eine sehr gute Transparenz aufweisen, gegebenenfalls auch über eine niedrige Wasserdampfdurchlässigkeit verfügen, physiologisch unbedenklich und mechanisch stabil sein. Sie müssen autoklavierbar und sterilisierbar sein, gegebenenfalls auch oberhalb von 121°C, und schließlich müssen sie auch mit dauerbeheizten Werkzeugen siegelbar, impulsschweißbar und/oder mit Ultraschall siegelbar sein.

Die Folien müssen nicht notwendigerweise Sauerstoffundurchlässig sein. Für Anwendungen, bei denen es auf eine hochwirksame Sauerstoffbarriere ankommt kann gegebenenfalls ein Sekundärpackmittel eingesetzt werden. das über eine wirksame Sauerstoffbarriere verfügt und die innere Folienpackung einhüllt. Befindet sich zwischen innerer Folienpackung und der Sekundärverpackung ein Sauerstoffänger kann es bevorzugt sein. wenn ein Sauerstofftransport durch die Folie der Innenpackung möglich ist. So kann der Restsauerstoff aus einem empfindlichen verpackten Gut problemlos während der Lagerung wirksam entfernt werden.

Für einige Anwendungen kann es vorteilhaft sein mit einfachen Mitteln (Siegeltemperatur, Siegelzeit und Siegeldruck) die Stärke der Verschweißung kontrollieren zu können. Hierdurch wird es möglich, insbesonders peelbare und/oder permanente Schweißverbindungen mit ein und demselben Folienmaterial ohne weitere Hilfsmittel zu realisieren. Des weiteren kann es von Nutzen sein, wenn die äußere Schicht der Folie leicht und dauerhaft mit üblichen Pigmenten bedruckbar ist. um so wichtige Informationen für den Anwender bereitstellen zu können.

Hierbei soll unter anderem auch die Migration der Pigmente in das Verpackungsinnere vermieden werden. Geeignete Materialien für Aussenschichten mit diesen Eigenschaften finden sich unter anderem in der Gruppe der Polyester, insbesonders der cycloaliphatischen Polyester und deren Copolymere. Beispiele für diese Art von Mehrschichfolien findet man in der EP 0 228 819 (American National Can Company and Kendall McGaw Laboratories) oder in der EP 0 199 871 (W.R. Grace).

Aus der EP 0216 639 (Wihuri Oy) sind Mehrschichtfolien mit wenigstens zwei Schichten für die Verpackung medizinischer Lösungen bekannt. Eine Schicht besteht aus Polyester. Polypropylen oder einer Mischung aus Polypropylen und Elastomer. Die zweite Schicht besteht aus einer Mischung aus Polypropylen und Elastomer. Eine mögliche dritte Schicht besteht aus Polypropylen oder Polyethylen. Die offenbarten Folien enthalten entweder mehr als 90 Gewichtsprozent Elastomer oder Polyester oder beides.

Obwohl der Einsatz von Polyestermaterialien mechanisch brauchbare Folien ermöglicht, gewinnen auch Eigenschaften wie eine vollständige Recyclierbarkeit und der Einsatz umweltfreundlicher Materialien zunehmend an Bedeutung.

Gerade die Vermeidung von Rohstoffen wie PVC. welchem die Weichmacherproblematik anhaftet. oder Polyestermaterialien. welche die Recyclierung aufgrund mangelnder Sortenreinheit erschweren. hat zur Entwicklung von mehr oder minder tauglichen Polyolefin-Folien geführt. Polyolefine können als Materialien in erster Näherung als chemisch inert, preiswert, umweltfreundlich und frei von bedenklichen. zur Migration befähigten. Zusätzen eingestuft werden. Viele der sogenannten Polyolefinfolien benötigen jedoch zur Einhaltung des vorgenannten Anforderungspofils eine Reihe von teuren oder nur schwer wiederaufarbeitbaren Zusätzen. Diese Additive müssen teilweise in einer solchen Menge zugesetzt werden. daß man nicht mehr von einer Polyolefinfolie reden kann. Andere Polyolefinfolien genügen nur den Mindestanforderungen in der einen oder anderen Hinsicht. so daß beispielsweise die mechanischen Eigenschaften der Folien, die optischen Eigenschaften und/oder auch die Fertigungschaarkteristika für Beutel (Siegeleigenschaften. Geschwindigkeit der Fertigung und ähnliches) verbesserungsbedürftig sind. Polyethylenmaterialien und darauf basierende und/oder diese enthaltende Folien sind häufig zu weich oder nicht ausreichend temperaturbeständig. Polypropylenmaterialien sind häufig spröde und wenig flexibel.

DE 33 05 198 A1 (W.R. Grace & Co.) betrifft eine mehrschichtige Polyolefinfolie. Offenbart wird unter anderem eine dreilagige Ausführungsform mit einer Kernschicht, die im wesentlichen aus linearem Polyethylen mit niederer Dichte besteht und zwei Außenschichten, die im wesentlichen aus einer Mischung von 80 Gew.-% eines Ethylen-Propylen-Copolymeren und 20 Gew.-% eines Propylen-Homopolymeren bestehen. Das in der Kemschicht eingesetzte LLDPE kann durch ein LMDPE ersetzt sein. Beide Materialien sind wenig dimensionsstabil. Hieraus folgt die Eignung des beschriebenen Mehrschichtenfolie als aufschrumpfbare Verpackung. Allerdings ist die mangelnde Temperaturstabilität prohibtiv für die Verwendung als Verpackung von medizinischen Gütern zu betrachten, da die Materialien einer. Heißdampfsterilisierung bei Temperaturen von 121°C oder mehr widerstehen können müssen.

Die US 4.643.926 (W.R. Grace & Co.. Cryovac Div.) offenbart flexible, dreilagige Folien für die Verpackung medizinischer Lösungen und Parenteralia, wobei eine Siegelschicht aus Ethylen-Propylen-Copolymer oder flexiblem Copolyester, eine oder mehrere Innenschichten umfassend elastomere Polymere und eine Außenschicht aus Ethylen-Propylen-Copolymer oder einem flexiblen Copolyester vorgesehen sind. Folien gemäß der US 4.643.926 und daraus gefertigte Verpackungen wie Beutel oder dergleichen verfügen über hervorragende mechanische Kennwerte. Nach heutigem Kenntnisstand allerdings ist für die offenbarten Materialkombinationen der Schichten die Anwesenheit wenigstens einer Haftvermittlerschicht notwendig. Hierfür kommt zum Beispiel ein Ethylen-Methacrylat-Copolymeres (EMA) oder ein Ethylen-Vinylacetat-Copolymer (EVA) in Frage, was aber wiederum nachteilig dazu führt. daß die Folie ohne Strahlenvernetzung nicht in der Hitze sterilisierbar ist. Letztlich läßt die Materialauswahl den Schluß zu, daß die Folien nicht ohne weiteres entsorgbar sind.

Die DE 2918507 (Baxter Travenol Labs) betrifft mehrschichtige im Autoklaven behandelbare. flexible Kunststofffolien sowie daraus gefertigte Beutel. Die Folie weist mindestens eine erste Schicht auf, die aus einem Blend aus 30 bis 90 Gewichtsprozent eines kautschukartigen Copolymers mit Olefin- und Polystyrolblöcken und 10 bis 70 Gewichtsprozent eines Polyolefins mit einer Vicat-Temperatur oberhalb von 120°C besteht und eine zweite Schicht aus einem Polyolefin, das im Hinblick auf eine niedrige Wasserdampfdurchlässigkeit halbkristallin ist.

Aus der US 4,778.697 (American National Can Company u. Baxter Travenol Labs) (entspricht DE 3674367 sowie EP-A 0 229 475) und der US 5.071.686 (Baxter Travenol Labs) sind mehrlagige Folien mit beispielsweise drei Schichten bekannt. In einigen Lagen der Folie wird ein Elastomer oder ein ethylenbasiertes Copolymer mit Polypropylen geblendet und in anderen Schichten mit Polyethylen. Es wird eine Vielzahl von beispielhaften Folienaufbauten offenbart. die jedoch alle im weitesten Sinne Polyethylen aufweisen. sei es als HDPE oder als ethylenbasiertes Copolymer. Aus den in der Schrift angegebenen mechanischen Parametern ist klar ersichtlich, daß nur wenige Rezepturen ausreichende mechanische Eigenschaften zulassen, um beispielsweise einen Falltest der Folien im sterilisierten und befüllten Zustand eines Beutels unbeschadet zu überstehen. Gerade die in Frage kommenden Zusammensetzungen jedoch zeichnen sich durch hohe Anteile von HDPE in der Mittelschicht (70 oder 80 Gewichtsprozent) aus. Aufgrund des hohen HDPE Gehaltes der Mittelschicht ist nachteilig ein für Polypropylen typisches Verhalten, d.h. eine ausgeprägte Streckgrenze der Folie im sterilisierten Zustand, erwartbar. Die erste Schicht ist dicker (60%) als die zweite Schicht (20 %) und die dritte Schicht (20%).

Die WO 98/36905 (Baxter International Inc.) beschäftigt sich mit coextrudierten mehrlagigen Folien für sterilisierbare Flüssigkeitsbehälter. Die WO 98/36905 zeigt, daß wenigstens ein fünflagiger Aufbau notwendig ist, um eine Folie mit ausgewogenem Eigenschaftsspektrum zu erhalten. Die Außenschicht ist ein Polypropylen gegebenenfalls mit geringem Ethylen- oder alpha-Olefingehalt: die Innenschicht ist ein Polyethylen mit gegebenenfalls geringen alpha-Olefingehalten: die Zwischenschicht ist komplex strukturiert und besteht aus mehreren Lagen. nämlich mindestens drei Lagen, wobei die komplexen Zwischenschichtlagen allesamt aus Polyolefinen bestehen und der Anteil der Ethyleneinheiten von den äußeren zu den inneren Schichten hin zunimmt. während die Erweichungstemperatur der Materialien der Schichten in der genannten Richtung abnimmt. Die Beispiele aus der WO 98/36905 beweisen. daß die innere Schicht. die aus LLDPE besteht, dicker als die äußere und dicker als die Summe der komplexen Zwischenschichten ist. Damit wird das LLDPE zum bestimmenden Material der Folie. LLDPE ist jedoch ein Material. welches im Hinblick auf sein Schmelzverhalten eher als "kristallin" zu bezeichnen wäre. Mit anderen Worten hat LLDPE eine eher definierte Schmelztemperatur. während Polypropylenmaterialien ein Enveichungsintervall aufweisen. Bei Einsatz von LLDPE in der Siegelschicht lassen sich nachteilig keine Siegel von unterschiedlicher Stärke herstellen. Dies jedoch ist bei Polypropylenmaterialien aufgrund der Unschärfe des Erweichungsintervalls nur durch Variation der Zeit oder Temperatur beim Versiegeln möglich. LLDPE-Innenschichten sind somit nachteilig. Darüberhinaus ist auch die Fertigung eines mindestens fünfschichtigen Aufbaus als nicht besonders vorteilhaft zu betrachten. Es wäre eine Struktur vorzuziehen, die auch mit nur drei Schichten allen Anforderungen gerecht werden kann. Schließlich ist der Verbund, wie er in den Beispielen der WO 98/36905 dargestellt wird, anfällig für Delamination. Die Kräfte für die Delamination in den Beispielen der WO 98/36905 sind zwar größer als in den Vergleichsbeispielen, erstrebenswert wäre jedoch eine Folie, die überhaupt nicht delaminiert.

Die EP-A 0 345 774 (Material engineering technology labs) betrifft aus Polyolefinen gefertigte Behälter. Es handelt sich offensichtlich um siegelbare zweilagige Folien. wobei jede der Lagen ein Blend aus PP und LLDPE oder PP, LDPE und PE darstellt. Daneben werden auch coextrudierte Folien beschrieben. die eine Innelage aus LDPE und PP sowie eine Außenschicht LLDPE aufweisen. Auch HDPE kann eingesetzt werden. Aufgrund des Einsatzes von HDPE. LDPE und LLDPE in den einzelnen Schichten des Materials ist davon auszugehen. daß die Folien allenfalls opak sein können. Daneben kann ein dominanter Einsatz von PE-Materialien Probleme mit der Autoklavierbarkeit bereiten. Schließlich erscheinen die in den Beispielen angegebenen Siegelzeiten im Bereich von bis zu 10 Sekunden oder mehr relativ lang, ja geradezu prohibitiv für eine industrielle Produktion.

Gemäß der US 5,478,617 (Otsuka Pharmaceutical Factory. Inc.) haben mehrschichtige Folien sterilisierbarer Container für medizinische Anwendungen eine Außenschicht enthaltend ein lineares Ethylen-alpha-Olefin Copolymer. eine Zwischenschicht enthaltend lineares Ethylen-alpha-Olefin Copolymer und eine Innenschicht aus Polypropylen mit linearem Etylen-alpha-Olefin Copolymer. Alle Schichten enthalten eine vorbestimmte Menge an HDPE. In den Beispielen werden, neben HDPE. LLDPEs und isotaktische PPs eingesetzt. Obwohl der Film transparent. flexibel und autoklavierbar sein soll und außerdem die Fertigung peelbarer Schweißnähte gestatten soll. hat er Nachteile. die vor allen Dingen durch die Materialwahl bedingt sein dürften. So zeigen LLDPEs und isotaktische PPs die typischen mechanischen Schwächen, wie sie für Polypropylene bekannt sind. Insbesondere dürfte ein Falltest wohl nicht bestanden werden. Daneben läßt der Einsatz von HPDE eher auf eine "opake" Folie als auf eine Folie von hoher Transparenz schließen, zumindest im Anschluß an eine Autoklavierbehandlung der Folie oder eines daraus bestehenden Beutels.

Die US 4.892,604 (Baxter International Inc.) beschreibt steriliserbare Kunststoffbehältnisse für medizinische Zwecke aus einer dünnen Mehrlagenfolie. Die erste Schicht der Folie ist die innenliegende Schicht im Kontakt mit dem medizinischen Gut. Sie ist aus Polyethylenvinylacetat (EVA). das frei von Plastifizierungsmitteln ist. Die zweite Schicht hat eine höhere Schmelztemperatur als die erste und besteht aus beispielsweise HDPE. Die innenliegende EVA-Schicht muß zum Gebrauch des Containers strahlenvernetzt werden.

PVC-freie mehrschichtige Folienaufbauten sind auch aus der EP-A 0 739 713 (Fresenius AG) ersichtlich. Sie weisen eine Außenschicht, eine Stützschicht sowie mindestens eine dazwischen angeordnete Mittelschicht auf wobei die Außen- und Stützschicht Polymere aufweisen. deren Erweichungstemperaturen nach Vicat oberhalb von etwa 121°C liegen und wobei die Mittelschicht Polymere aufweist, deren Erweichungstemperaturen unterhalb von etwa 70 °C ist. Bevorzugt beziehen sich die genannten Vicat-Temperaturen nicht nur auf Polymere, welche Teil der einzelnen Schichten sind. sondern auf das Material der jeweiligen Schicht insgesamt. Die beschriebene Folie wird üblicherweise noch durch eine Siegelschicht ergänzt, so daß insgesamt ein vier- sechs- usw. -lagiger Aufbau resultiert. Zunächst fällt auf, daß alle Schichten PE-Typen aufweisen können. Sobald zuviel PE in den einzelnen Schichten enthalten ist. wird jedoch ein ungünstiges Zug-Dehnungsverhalten mit ausgeprägter Streckgrenze immer wahrscheinlicher. Die kautschukartige Mittelschicht (Vicat kleiner 70 °C) soll für Flexibilität sorgen. Dies wird durch SEBS und den Einsatz ähnlicher Materialien in der Mittelschicht erreicht. Die Folie zeigt jedoch im sterilisierten Zustand immer noch eine auspeprägte Streckgrenze und weist somit die damit verbundenen mechanischen Nachteile auf.

Hinsichtlich der einzusetzenden Materialien kristallisiert sich bei der Betrachtung des Standes der Technik ein zunehmender Trend zum Einsatz von Polypropylenmaterialien heraus. Mögliche Ursachen hierfür können, wie bereits erwähnt. darin gesehen werden, daß die Erweichungsintervalle und Schmelzpunkte von Polyethylenen häufig nicht ausreichend für eine Heißdampfsterilisierung sind. Außerdem haben viele Polypropylene im Hinblick auf Wasserdampf im allgemeinen günstigere Barriereeigenschaften verglichen mit Polyethylenen. Schließlich muß man auch die günstigeren optischen Eigenschaften von Polypropylenen berücksichtigen. In der Praxis kann man versuchen, die Nachteile des Polypropylens durch Copolymerisation von Propylen mit anderen Monomeren oder durch Verwendung eines Blend aus Polypropylen und anderen Polymeren zu verringern. Zu den erwünschten Ergebnissen. nämlich einem weichen und flexiblen Material mit höchster mechanischer Verarbeitbarkeit sowie extremer dynamischer und statischer Belastbarkeit. hat diese Vorgehensweise bislang jedoch noch nicht geführt.

Aus der DE 196 40 038 A1 sowie der entsprechenden WO 97/34951 (Sengewald Verpackungen GmbH) sind Mehrlagenfolien, Verfahren zu ihrer Herstellung und deren Verwendung bekannt geworden, bei denen die Mehrlagenfolie eine Polymer-Außenschicht. Polymer-Mittelschicht und heißsiegelbare Polymer-Innenschicht. mit mindestens einer Verbindungsschicht aus einem Polypropylen-Compound und/oder Blend aus einem Polypropylen-Homo- und/oder - Copolymerisat und mindestens einem thermoplastischen Elastomeren und/oder Polyisobutylen und einer Innenschicht aus einem Polypropylen-Compound aus einem Polypropylen-Homo- und/oder -copolymerisat mit mindestens einem thermoplastischen Elastomer aufweist. Ein beispielhafter Aufbau umfaßt eine Außenlage (15 µm) aus PP-Homopolymerisat, eine Verbindungsschicht (95 µm) aus PP-Compound. nämlich PP-Homopolymerisat mit SEBS als TPE-S und Plasticiser. sowie eine Innenschicht (40 µm) aus PP-Homopolymerisat und SEBS als TPE-S. Obwohl die WO 97/34951 keine Lehre im Hinblick auf die Menge des SEBS in der Mittelschicht wie auch der Innenschicht gibt. scheint doch der Anteil verhältnismäßig hoch sein zu müssen. da die als Compound eingesetzten Materialien der Verbindungsschicht und der Innenschicht. CAWITON MED PR 3663 beziehungsweise CAWITON MED PR 3530, relative hohe SEBS-Gehalte aufweisen. Der Einsatz von SEBS ist zwar für die Flexibilität und die mechanischen Parameter (Falltest und Manschettentest) vorteilig. SEBScompounds sind jedoch relativ teuer. Außerdem wäre eine möglichst hohe Sortenreinheit im Bezug auf die eingesetzten Kunststoffe zweckmäßig für eine verbesserte Recyclierung der Materialien. Daneben ist der Einsatz von Plastifizierungsmitteln offensichtlich essentiell.

Die EP-A-0 564 206 (Terumo K. K.) offenbart medizinische Behälter mit merhschichtiger Struktur. Es wird eine dreilagige Struktur vorgestellt. wobei die äußere und die innere Schicht aus wenigstens einem kristallinen Polyolefin gemacht sind und die Zwischenschicht aus wenigstens einem kristallinen Polyolefin und einem amorphen Polyolefin zusammensgesetzt ist. Abgesehen davon, daß die beschriebenen Container aufgrund der Verwendung von kristallinen Polyolefinen in der inneren und der äußeren Schicht nicht die Transparenz aufweisen. die heute als Standard angesehen wird (Transparenz größer als 92-96 % (einige der beispielhaften Folien wären vielmehr als opak zu bezeichnen. die Transparenz wird nur durch den Zusatz von hydrierten Petroleumharzen auf ein ausreichendes Maß verbessert), ist die gezeigte Struktur auch aus anderen Gründen nachteilig. In den Beispielen werden als kristalline Polyolefine ausschließlich isotaktische Propylenhomo- und -copolymere sowie isotaktische Butylenhomopolymere eingesetzt. Von kristallinen Polypropylenen und Polybutylenen ist jedoch bekannt, daß sie verstärkt zum typischen Polypropylenverhalten neigen. soweit die mechanischen Eigenschaften betroffen sind. Insbesonders weisen die genannten Materialien üblicherweise einen relativ hohen E-Modul sowie eine Streckgrenze im Zug-Dehnungsversuch auf. Damit würden mit Flüssigkeit befüllte Beutel einem Falltest aus 2 m Höhe vermutlich nicht unbeschadet widerstehen. Darüberhinaus zeigen mit Kochsalzlösung gefüllte Beutel gemäß der EP-A 0 564 206 nach einer Heißdampfsterilisationsbehandlung lediglich ein Erscheinungsbild. das in der Offenbarung als "not substantially deteriorated" bezeichnet wird. Mithin läßt sich also schon eine negative Veränderung nach einer Heißdampfsterilisation ableiten.

Unter anderem belegt schon allein die große Zahl der im Stand der Technik beschriebenen Folien, daß die ideale Folie für die Herstellung von Verpackungen für wässrige oder ölige medizinische Lösungen, vorzugsweise für Lösungen auf wässriger Basis, bislang noch nicht gefunden zu sein scheint. Alle bekannt gewordenen Folien. insbesondere auch diejenigen. die tatsächlich zur Marktreife gelangt sind, leiden - wie oben dargestellt - an der einen oder anderen Unzulänglichkeit. Sofern man PVC aufgrund seiner Weichmacherproblematik und Polyester sowie Polyamide aufgrund einer nicht befriedigenden Recyclierbarkeit vermeiden möchte, gelangt man im Stand der Technik zu Folien. die auf Polyolefinmaterialien basieren. Ein vorwiegender Einsatz von Polyethylenmaterialien kann zu Problemen bei der Heißdampfsterilisation führen. Die Temperaturen können bei diesem Vorgang ab und an deutlich über die vorgeschriebenen 121°C hinausgehen. beispielsweise 125 °C oder sogar mehr. Bei solchen "Ausreissern" jedoch besteht für Polethylen-basiertes Material das Problem eines eventuell zu niedrigen Schmelzpunktes. Transparenz. Dichtigkeit und mechanisches Verhalten der Folie können bis zur Unbrauchbarkeit verändert werden.

Polypropylen-basierte Materialien haben im allgemeinen deutlich höhere Schmelztemperaturen als PE. Probleme bereiten PP-basierte Materialien jedoch im Hinblick auf die mechanischen Eigenschaften. Neben diversen pharmazeutischen und optischen Anforderungen an Folien und daraus hergestellten Verpackungen wie Beutel und dergleichen, beispielsweise sogenannte i.v. Bags. müssen Folien auch bestimmten. ganz unterschiedlichen, mechanischen Beanspruchungen gewachsen sein. um den (mechanischen) Produktanforderungen der Bags zu genügen.

Zwei Anforderungen an das "Produkt ..i.v. Bag" sind aus der Sicht der Kunststoffolie besonders anspruchsvoll. Zum einen muß ein gefüllter Beutel einen Falltest gemäß DIN ISO 58363-15:1996 unbeschadet aushalten können. Hierbei handelt es sich um eine extreme dynamische Beanspruchung für die Folie des Bags. Zum anderen muß ein gefüllter Beutel auch einem sogenannten "Druckmanschettentest" unbeschadet widerstehen können. Hierbei handelt es sich um eine Dauerdruckbelastung eines gefüllten Beutels, an den eine Manschette angelegt wird. Diese extreme Beanspruchung ist im Gegensatz zum dynamischen Falltest als statisch zu bezeichnen. Beide Kriterien widersprechen zunächst per se den Eigenschaften eines einzigen Kunststoffmaterials und wurden bislang auch von Verbundfolien aus ausschließlich auf Polyolefinen basierenden. vorzugsweise auf Polypropylenen basierenden, Materialien noch nicht in zufriedenstellender Weise erfüllt. Dabei ist der "statische Druckmanschettentest" insgesamt als anspruchsvolleres Praxiskriterium einzuordnen als etwa die DIN-Prüfmethode der Druckfestigkeit gemäß DIN ISO 58363-15, welche bei Bestehen des Druckmanschettentests ohne weiteres erfüllt wird.

Angesichts des hierin genannten und diskutierten Standes der Technik war es mithin eine Aufgabe der Erfindung eine Mehrschichtfolie für die Verpackung von flüssigen, medizinischen Produkten anzugeben, welche im wesentlichen auf Polyolefinmaterialien basiert und die Fertigung von Verpackungen ermöglicht. die sowohl im Hinblick auf dynamische Belastungen als auch in Bezug auf statische Dauerbelastungen möglichst widerstandsfähig sind.

Nach Möglichkeit sollen die erfindungsgemäßen Folien statisch und dynamisch stabilere Verpackungen erlauben, als bekannte auf Polypropylenmaterialien basierende Folien oder Folienverbunde.

Nach Möglichkeit sollen die neuen Folien auch statisch und dynamisch zumindest ebenso belastbar sein wie bekannte, nicht auf Polyolefinmaterialien basierende Folien, wie etwa Polyester. Polyamide oder Polyvinylchlorid aufweisende Folien oder Folienverbunde.

Die neuartigen Folien sollen auch bei tieferen Temperaturen als Raumtemperatur. z. B. bei 0 °C. immer noch über exzellente bis gute mechanische Eigenschaften verfügen. Hierzu gehören unter anderem eine hohe Flexibilität bei tiefen Temperaturen. eine geringe Tieftemperatursprödigkeit und eine hohe Schlagzähigkeit bei den genannten tiefen Temperaturen.

Bevorzugt sollten die neuartigen Mehrschichtfolien möglichst wenig Schichten aufweisen und damit möglichst einfach und kostengünstig herstellbar sein.

Außerdem sollen die mehrlagigen Folien der Erfindung möglichst sortenrein sein und günstigenfalls auf Polypropylenmaterialien beruhen. mit möglichst geringen Anteilen an anderen Monomereinheiten.

Weiters sollen die Materialien der einzelnen Schichten aus möglichst wenigen einzelnen Substanzen bestehen. Sofern für eine Schicht ein Blend oder Compound von Polymeren eingesetzt wird, soll der Blend möglichst wenige Polymer- oder Copolymerarten aufweisen.

Die neue Folie soll eine hohe Transparenz aufweisen. Sie soll autoklavierbar sein und einer Heißdampfsterilisierung auch bei Temperaturen von 121°C oder mehr unbeschadet. d.h. ohne nachteilige Veränderungen von Transparenz und Flexibilität, widerstehen können. Beispielsweise soll eine Kristallisation der Folie oder eine andere Oberflächenbeeinflußung wie Verfärbungen. Weißfärbungen oder das Auftreten von Opazität. durch die thermische Behandlung minimiert oder vorzugsweise ausgeschlossen sein.

Schließlich soll die Folie unter pharmazeutischen und medizinischen Aspekten völlig unbedenklich sein. Hierzu gehört auch. daß sie keine Zusätze aufweisen soll. die medizinisch bedenklich erscheinen könnten. Insbesonders soll die neue Folie keine Tendenz zur Migration von Zusätzen aus der Folie in die darin aufbewahrten Produkte besitzen. selbst dann. wenn lange Lagerzeiten bestehen und es sich bei den Produkten um lipophile Flüssigkeiten handelt.

Daneben ist es Aufgabe der Erfindung eine bedruckbare Folie zu schaffen, die mit herkömmlichen Verfahren und Pigmenten leicht, einfach und dauerhaft zu bedrucken ist. ohne daß die Pigmente oder Farbstoffe in Kontakt mit den aufbewahrten Gütern gelangen können.

Darüberhinaus soll die Folie der Erfindung Schweißverbindungen ermöglichen. die möglichst wahlweise peelbar oder nicht peelbar sind.

Die erfindungsgemäße Folie soll auch eine Kontrolle der Stärke der Verschweißung mit einfachen Mitteln (Siegeltemperatur und Siegelzeit) zulassen. In diesem Zusammenhang soll aus der Folie der Erfindung auch die Fertigung von Behältern möglich sein, welche zugleich sowohl permanente Siegelnähte als auch mit unterschiedlicher Kraft aufreißbare Nähte aufweisen.

Insbesonders soll die Folie sowohl mit dauerbeheizten Werkzeugen siegelbar als auch impulschweißbar sein.

Die neuartige Folie soll auch ohne Anwendung von Schutzabdeckungen aus Teflon. Silikon oder dergleichen verschweißbar sein. Solche Schutzabdeckungen mußten in der Vergangenheit häufig erneuert werden. Außerdem soll die neue Folie ein ausreichend großes "Verarbeitungsfenster" besitzen. Hierzu gehört. daß selbst bei geringer Temeperaturkonstanz beim Verschweißen dennoch eine ausreichende Festigkeit der Verschweißung erzielbar sein muß. Die Weite des Prozessfensters ist auch und vor allem bei der Herstellung peelbarer Nähte von hoher Bedeutung.

Daneben soll die neue Folie die Fertigung vollständig kollabierbarer Beutel oder Bags gestatten.

Schließlich sollen Verpackungen aus der erfindungsgemäßen Folie als Gesamtheit recyclierbar sein. möglichst ohne downcycling, d.h. es sollen nach Möglichkeit ausschließlich wenig umweltfeindliche Materialien eingesetzt werden.

Weiterhin sollen die Folien der Erfindung auch eine geringe Wasserdampfdurchlässigkeit aufweisen. Ebenso wie sie Klarheit und hohe Transparenz besitzen sollen. sollen sie auch ein angenehmes Gefühl bei Berührung vermitteln sollen und auch sonst einen hohen ästhetischen Wert besitzen, d.h. keine Verfärbungen oder Flecken aufweisen.

Letzlich sollen nicht nur wässrige sondern auch ölige oder lipophile Flüssigkeiten in Behältnissen aus erfindungsgemäßen Folien lagerbar sein.

Eine weitere Aufgabe der Erfindung ist darin zu sehen. ein Verfahren zur Herstellung von Mehrschichtfolien der Erfindung anzugeben. das möglichst einfach und kostengünstig durchführbar sein soll.

Hierbei soll die neue Folie bevorzugt mit Koextrusionstechniken herstellbar sein, wobei die Kompatibilität der Materialien den Verzicht auf Haftvermittler oder Kaschierkleber oder Zusatzschichten, die diese Funktion übernehmen. gestatten soll.

Noch eine Aufgabe der Erfindung ist die Angabe der Verwendung erfindungsgemäßer Folien.

Gelöst werden diese Aufgaben sowie weitere Aufgaben. die zwar nicht im einzelnen wörtlich genannt wurden. die sich jedoch aus der einleitenden Diskussion des Standes der Technik ohne weiteres erschließen oder wie selbstverständlich ableiten lassen. durch eine Mehrschichtfolie der eingangs erwähnten Gattung mit den kennzeichnenden Merkmalen des Anspruches 1.

Vorteilhafte Ausgestaltungen der erfindungsgemäßen Mehrschichtfolien sind Gegenstand der auf den unabhängigen Produktanspruch rückbezogenen Ansprüche.

In verfahrensmäßiger Hinsicht geben die Merkmale des unabhängigen Verfahrensanspruchs eine Lösung des der Erfindung im Hinblick auf die Verfahrensaspekte zugrundeliegenden Problems an. Vorteilhafte Verfahrensvarianten werden in den vom unabhängigen Verfahrensanspruch abhängigen Verfahrensansprüchen unter Schutz gestellt.

Hinsichtlich der Verwendung liefert der Anspruch aus dem Anspruchssatz mit der entsprechenden Kategorie die Lösung des zugrundeliegenden Problems. wobei vorteilhafte Ausgestaltungen Gegenstand der auf diesen Produktanspruch rückbezogenen Ansprüche sein können.

Dadurch, daß eine Mehrschichtfolie, insbesonders für die Verpackung von flüssigen, medizinischen Produkten, aufweisend wenigstens drei Schichten, nämlich eine Außenschicht (A), eine Innenschicht (I) und eine dazwischen angeordnete Mittelschicht (M), von denen jede zu 60 bis 100 Gewichtsprozent aus Polypropylenmaterialien und zu 40 bis 0 Gewichtsprozent aus einem thermoplastischen Elastomer besteht, wobei sich die Gewichtsangaben jeweils auf das Gesamtgewicht der jeweiligen Schicht beziehen, sich dadurch auszeichnet, daß die Mehrschichtfolie nach einer Heißdampfsteriliserung bei 121°C oder höheren Temperaturen keine nach DIN EN ISO 527-1 bis-3 meßbare Streckgrenze (no vield) aufweist gelingt es überraschend und unerwartet eine mindestens dreilagige Folie zur Verfügung zu stellen, aus der medizinische Verpackungen hergestellt werden können, die alle von den Norminstituten und den industriellen Verarbeitern bezüglich der physikalischen Eigenschaften der Verpackungen aufgestellten Forderungen in herausragender Weise erfüllt und die zugleich vollständig aus Polypropylenmaterialien bestehen kann. Außerdem gelingt es, eine große Zahl weiterer zusätzlicher Vorteile zu erlangen. Hierzu gehören unter anderem:
- Die erfindungsgemäße Folie ist dynamisch und statisch äußerst belastbar. Verpackungen aus einer erfindungsgemäßen Folie überstehen einen Falltest gemäß DIN ISO 58363-15:1996 ebenso unbeschadet wie sie einer statischen Dauerbelastung (Druckmanschettentest) schadlos widerstehen.
- Erstmals kann eine nur aus Polypropylenmaterialien bestehende Folie bereitgestellt werden, die ein mechanisches Niveau aufweist. das polyesterhaltigen oder Polyethylenen aufweisenden Mehrschichtfolien entspricht.
- Die optischen Eigenschaften, wie Klarheit. Transparenz oder Fehlstellen. der erfindungsgemäßen Folie sind ausgezeichnet, auch und insbesonders nach einer Heißdampfsterilisierung. Dabei werden keine Zusätze zur Verbesserung der Transparenz benötigt.
- Die Autoklavierbarkeit der Folien gemäß der Erfindung ist ausgezeichnet. Auch Heißdamfsterilisationsbehandlungen bei Temperaturen von mehr als 120 °C oder 121°C werden unbeschadet ohne wesentliche Verschlechterung des mechanischen Eigenschaftsniveaus überstanden.
- Hohe Sortenreinheit der Folie fördert eine vollständige Rezyklierbarkeit der Folien. beispielsweise durch Vermeidung von Polyestern. Polyamiden oder PVC.
- Die Folie der Erfindung ist extrem flexibel und erlaubt dadurch problemlos die Fertigung sogenannter "collapsible container".
- Die Folie der Erfindung ist problemlos siegelbar sowohl mit dauerbeheizten Werkzeugen als auch impulsschweißbar.
- Die Materialien der Innenschicht erlauben gegenüber einigen bekannten Strukturen kürzere Siegelzeiten, so daß die Taktzeit pro anzufertigendem Verpackungsmittel (Leerbeutel und dergleichen) sinkt und damit die Produktivität der Schweißlinien entsprechend ansteigt.
- Die Siegelschicht der erfindungsgemäßen Folie ermöglicht eine Beeinflußung und Kontrolle der Stärke der Schweißverbindungen durch Steuerung von Siegeltemperatur und Siegelzeit.
- Die Folie der Erfindung eignet sich fallweise auch zur Fertigung von Beuteln zur Aufbewahrung öliger oder lipophiler Flüssigkeiten.
- Die erfindungsgemäße Folie verfügt über eine relativ geringe Wasserdampfdurchlässigkeit, für bestimmte Einsatzzwecke sind weitere Barriereschichten damit überflüßig. Es können jedoch je nach angestrebetem Einsatzzweck andere Schichten zu Barrierezwecken (Wasserdamfbarrieren. Sauerstoffbarrieren oder andere) mit der erfindungsgemäßen Folienstruktur kombiniert werden.
- Durch die Minimierung der Verwendung von beziehungsweise den vollständigen Verzicht auf Anteile an thermoplastischen Elastomeren aus der Gruppe der Styrolblockcopolymere in allen Schichten oder in der überwiegenden Zahl der Schichten der erfindungsgemäßen Folienrezeptur sinkt der Folienpreis pro Flächeneinheit erheblich.
- Die Folie der Erfindung läßt sich als Flachfolie fertigen. Damit weist sie ein ausgesprochen gleichmäßiges Dickenprofil auf, was sich sehr positiv auf die Maschinengängigkeit der Folie auswirkt.
- Die Folie der Erfindung weist in Verbindung mit ihren hervorragenden optischen Eigenschaften (Glanz, Klarheit. Transparenz) eine hervorragende Bedruckbarkeit und eine ganz ausgezeichnete strukturelle Integrität auf.

Die Mehrschichtfolie gemäß der Erfindung ist insbesonders dadurch ausgezeichnet, daß sie nach einer Heißdampfsteriliserung bei 121°C oder höheren Temperaturen keine nach DIN EN ISO 527-1 bis -3 meßbare Streckgrenze (no yield) aufweist. Der Begriff "Streckgrenze" wird im Rahmen der vorliegenden Erfindung identisch mit dem in der angesprochenen Norm verwendeten Begriff "Streckpunkt" (yield point) gebraucht. Mit "Streckgrenze" oder "Streckpunkt" ist im Zusammenhang mit der Erfindung eine bestimmte Streckspannung (yield stress) gemäß Punkt 4.3.1 (Definitionen) aus EN ISO 527-1:1996 gemeint. Insbesonders handelt es sich bei der angesprochenen Streckspannung per definitionem um den ersten Wert im Zugdehnungsdiagramm, bei dem ein Zuwachs der Dehnung ohne Steigerung der Spannung auftritt. Da dieser Wert bei erfindungsgemäßen Folien nicht erreicht wird fehlt die Streckgrenze (no yield). Eine Spannung, bei der zum erstenmal eine Verlängerung der Probe ohne weiteren Spannungsanstieg auftritt ist bei Folien der Erfindung nach einer Heißdampsterilisationsbehandlung nicht nachweisbar. Die erfindungsgemäßen Folien zeigen somit im Hinblick auf die Zugspannungs-/Dehnungs-Beziehung. insbesonders hinsichtlich der Prüfung nach Teil 3 der DIN EN ISO 527 "Prüfbedingungen für Folien und Tafeln". Deutsche Fassung vom Oktober 1995. ein Verhalten. daß der Kurve d aus Teil 1 der DIN EN ISO 527 Bestimmung der Zugeigenschaften". Deutsche Fassung vom April 1996, entspricht. In den dort abgebildeten Spannungs-/Dehnungskurven steht die Kurve d für einen zähen Werkstoff ohne Streckpunkt, im Gegensatz zu spröden Werkstoffen (Kurve a) und zähen Werkstoffen mit Streckpunkt (Kurven b und c). Damit wird mit der Erfindung erstmals eine Polypropylenfolie für medizinische Anwendungszwecke geschaffen, die als Verpackungsfolie auch nach einer Heißdampfsterilisierung ein quasi gummielastisches Verhalten zeigt. Die Folie der Erfindung vereint damit zwei an sich gegenläufige Prinzipien in sich, was so bislang nicht für möglich gehalten wurden.

Erfindungsgemäße Folien zeichnen sich unter anderem auch dadurch aus. daß sie weder eine Streckgrenze in transversaler Richtung (TD) noch in Maschinenrichtung (MD) aufweisen. Die Richtungsangabe TD oder MD bezieht sich auf die Herstellung der Folien.

Die erfindungsgemäße Folie ist wie beschrieben schadlos mit Heißdampf sterilisierbar. Für die Prüfung auf das Vorliegen einer Streckgrenze nach DIN EN ISO 527-1 bis -3 wurden die erfindungsgemäßen Folien einer Sterilisationbehandlung mit Heißdampf bei 121°C unterzogen. Das im Zuge der angesprochenen Untersuchungen angewendete Sterilisationsverfahren ist dem Fachmann insbesonders unter dem Begriff "Heißwasserberieselungsverfahren" bekannt. Selbstverständlich sind die Folien der Erfindung auch bei anderen Temperaturen und mit anderen oder abgewandelten Methoden autoklavier- und sterilisierbar. Hierzu gehören beispielsweise auch die Sterilisationsmethoden. die unter Einsatz ganz allgemein von Licht. von gewissen Anteilen des sichtbaren Spektrums des Lichts oder mit sonstiger Strahlung funktionieren.

Damit die gesamte Mehrschichtfolie der Erfindung keine Streckgrenze aufweist. setzt die Erfindung bevorzugt eine relativ dicke Mittelschicht und vergleichsweiße dünnere Innen- und Außenschichten ein. Ein besonderes Merkmal der erfindungsgemäßen Folien besteht also in einem bestimmten Verhältnis der Dicke der Mittelschicht zur gesamten Dicke der Folie. Demzufolge liegt das Verhältnis der Dicken der Mittelschicht (M) zur Gesamtdicke der Folien, welche sich als Summe der Dicken der Schichten (A), (M) und (I) ergibt, im Bereich von 40 bis 80%. Ist der Anteil der Mittelschicht (M) an der gesamten Dicke geringer als 40 % so kann dies zur Folge haben, daß die Flexibilität des Beutels unzureichend wird. Ist der Anteil der Mittelschicht (M) an der gesamten Dicke der Mehrschichtfolie größer als 80 %. kann die statische Belastbarkeit nicht ausreichend sein und der Druckmanschettentest eines gefüllten Beutels wird mit einer solchen Folie aller Voraussicht nach nicht mehr bestanden.

Bevorzugte Mehrschichtfolien der Erfindung kennzeichnen sich dadurch, daß der Anteil der Dicke der Mittelschicht (M) an der Gesamtdicke der Folie zwischen 45 und 75 %, vorzugsweise zwischen 50 und 70 % und besonders bevorzugt zwischen 50 und 65 % ist. Vorzugsweise ist also die Mittelschicht dominierend, insofern die Dicke betroffen ist. Mit einer verhältnismäßig dicken Mittelschicht ergeben sich gerade in den bevorzugten und besonders bevorzugten Bereichen mehrlagige Folien mit einem ausgewogenen Eigenschaftsspektrum hinsichtlich dynamischer und statischer mechanischer Parameter sowie Flexibilität.

Abweichend von den genannten Dickenbereichen kann es auch bevorzugt sein. wenn der Anteil der Dicke der Mittelschicht (M) an der Gesamtdicke der Folie zwischen 60 und 80% bevorzugt zwischen 60 und 75 %. besonders bevorzugt zwischen 65 und 75 % ist. Diese Variante ist vor allem dann bevorzugt, wenn besonders gute dynamische Eigenschaften erwünscht sind.

Auch für die Innenschicht (I) und die Außenschicht (A) ergeben sich bevorzugte Dicken im Verhältnis zur mittleren Schicht oder Zwischenschicht (M).

Bei bevorzugten Abwandlungen der Mehrschichtfolie der Erfindung ist der Anteil der Dicke der Außenschicht (A) an der Gesamtdicke der Folie im Bereich zwischen 30 und 7.5 %.

Von besonderem Interesse für die Erfindung sind auch Mehrschichtfolien, die dadurch gekennzeichnet sind. daß der Anteil der Dicke der Innenschicht (I) an der Gesamtdicke der Folie im Bereich zwischen 30 und 12,5 % ist.

Geht man von einer bevorzugten Dicke der Schicht (M) von 40 bis 70 % der Gesamtdicke der Folie aus, ergibt sich für die Schicht (A) ebenso wie für die Schicht (I) ein Anteil an der Gesamtdicke von vorzugsweise 30 bis 15%. Im Hinblick auf den besonders zweckmäßigen Dickenbereich der Mittelschicht von 50 bis 65% ergeben sich Dicken für die Außenschicht (A) und die Inneschicht (I) im Bereich von jeweils 25 bis 17,5 %.

Geht man von einer bevorzugten Dicke der Schicht (M) von 60 bis 80 % der Gesamtdicke der Folie aus. ergibt sich für die Schicht (A) in einer Ausführungsform ein Anteil an der Gesamtdicke der Folie zwischen 15 und 7.5 %. während für die Schicht (I) ein Anteil an der Gesamtdicke von vorzugsweise 25 bis 12,5 % als zweckmäßig zu bezeichnen ist.

Die Mehrschichtfolien der Erfindung lassen sich über einen breiten Bereich absoluter Dicke fertigen. In Abhängigkeit von der angestrebten Verwendung können dickere Mehrschichtfolien von einer Gesamtdicke von mehr als 300 µm bevorzugt sein, es können aber auch dünnere Folien von weniger als 120 µm Gesamtdicke gefertigt werden. Eine bevorzugte erfindungsgemäße Ausführungsform kennzeichnet sich dadurch, daß die Gesamtdicke der Folie im Bereich zwischen 120 und 300 µm. vorzugsweise zwischen 150 und 250 µm. besonders bevorzugt zwischen 170 und 230 µm ist.

Die Mittelschicht kann dem gesamten Mehrschichtgebilde vorzugsweise ein ausreichendes Maß an Flexibilität vermitteln. Die Mittelschicht (M) zeichnet sich dabei dadurch aus. daß der E-Modul des Materials der Mittelschicht (M) kleiner oder gleich 250 MPa, zweckmäßig kleiner oder gleich 150 MPa. vorzugsweise kleiner oder gleich 135 MPa, besonders bevorzugt kleiner oder gleich 100 MPa ist. jeweils gemessen nach DIN EN ISO 527-1 bis -3. In diesem Zusammenhang wird der E-Modul nach ISO 527-1 bis -3 für eine Folie und einen entsprechenden Prüfkörper bestimmt, welcher aus dem Material der Schicht allein gefertigt ist. Besteht die Schicht (M) aus mehr als einem polymeren Material (Blend oder Compound) so gilt der angegebene Wert für den Blend oder Compound. Ist der E-Modul der Mittelschicht größer als 150 MPa, kann die gesamte mehrschichtige Folie hinsichtlich der Flexibilität unzureichend sein. Von besonderem Interesse sind erfindungsgemäße Mehrschichtfolien. bei denen der E-Modul der Mittelschicht (M) im Bereich von 30 bis 80 MPa, bevorzugt 30 bis 60 MPa, noch mehr bevorzugt 35 bis 55 MPa. vorzugsweise zwischen 35 und 50 MPa und besonders bevorzugt zwischen 40 und 45 MPa ist. jeweils gemessen nach DIN EN ISO 527-1 bis -3.

Im Hinblick auf die Mittelschicht (M) kommen bevorzugt solche Polypropylenmaterialien oder Compounds von Polypropylenmaterialien mit thermoplastischen, elastomeren Materialien. vorzugsweise Styrolblockcopolymeren, in Frage, die ein möglichst zähes Elastizitätsverhalten besitzen. In einer Variante kann es günstig sein, Materialien einzusetzen, deren Streckgrenze kleiner oder gleich 8 MPa ist, bestimmt bei einem Probekörper Typ 2 und einer Abziehgeschwindigkeit von 200mm/min. Es kann aber auch bevorzugt sein, noch zähere Materialien zu verwenden. Daher ist es fallweise von besonderem Vorteil ein Material für die Mittelschicht (M) auszuwählen. das nach einer Heißdampfsteriliserung bei 121°C oder höheren Temperaturen im Heißwasserberieselungsverfahren, vorzugsweise auch vor einer entsprechenden Heißdampfsteriliserung, keine nach DIN EN ISO 527-1 bis-3 meßbare Streckgrenze (no yield) aufweist. bei einem Probekörper Typ 2 und einer Abziehgeschwindigkeit von 200mm/min.. Durch eine entsprechende Materialwahl werden mehrschichtige Folien zugänglich, die bei Einhaltung der oben genannten Dickenverhältnisse der Schichten zueinander auch relativ spröde. d.h. weniger zähe Materialien für die Außenschicht (A) erlauben. insoweit das Elastizitätsverhalten der Materialien betroffen ist.

Besondere Mehrschichtfolien nach der Erfindung liegen unter anderem dann vor. wenn der E-Modul des Materials der Außenschicht (A) größer als der E-Modul des Materials der Mittelschicht (M) ist. Bevorzugt ist der E-Modul des Materials der Außenschicht (A) größer als 250 MPa. vorzugsweise größer als 300 MPa. besonders bevorzugt größer als 400 MPa ist, jeweils gemessen nach DIN EN ISO 527-1 bis -3.

Besondere Bereiche für den E-Modul der Außenschicht (A) sind dadurch gekennzeichnet, daß der E-Modul des Materials der Außenschicht (A) im Bereich von 300 bis 600 MPa. bevorzugt 400 bis 600 MPa. noch mehr bevorzugt 450 bis 550 MPa. vorzugsweise zwischen 450 und 500 MPa. auch besonders bevorzugt zwischen 400 und 450 MPa ist, jeweils gemessen nach DIN EN ISO 527-1 bis -3.

Sofern eine Mittelschicht (M) aus einem Material eingesetzt wird. welches eine kleine oder geringfügige aber im Zug-Dehnungsdiagramm nachweisbare Streckgrenze besitzt, kann es zweckmäßig sein, mit dieser Mittelschicht (M) eine Außenschicht (A) zu kombinieren. welche einen noch größeren E-Modul besitzt. Dieser kann dann zweckmäßige Werte von mehr als 1000 MPa, besonders bevorzugt von größer als 1150 MPa annehmen. Bevorzugte Bereiche liegen dann zwischen 900 und 1300 MPa, noch günstiger scheinen Werte im Bereich von 1000 bis 1150 MPa für den E-Modul.

Es versteht sich, daß im Hinblick auf die einzelnen Schichten (A), (M) und (I). unter dem E-Modul ein Wert verstanden wird, der sich für Probekörper gemäß DIN EN ISO 527-1 bis -3 bestimmen läßt. Die angegebenen Werte beziehen sich dabei auf Probekörper, die man keiner Sterilisationsbehandlung ausgesetzt hat. Sobald im Rahmen der Anmeldung Streckpunkt oder E-Modul von Folien eine Rolle spielt. handelt es sich in der Regel um Werte. welche an Folien bestimmt wurden, die einer Sterilisationsbehandlung unterzogen wurden. Sollten die Werte für unsteriliserte Folien gemeint sein. so ist dies im Einzelfall unter Umständen besonders angegeben.

Im Hinblick auf das thermische Verhalten (Stabilität der Struktur in der Wärme während der Autoklavierbehandlung) sowie die Siegelbarkeit der Innenschicht (I) läßt die Erfindung eine hervorragende Kontrolle über das gesamte Spektrum der geforderten Eigenschaften zu. Vorzugsweise ist der Schmelzpunkt der äußeren Schicht (A) größer als der Schmelzpunkt der inneren Schicht (I).

Es kann auch bevorzugt sein. die Schichten (A), (M) und (I) so auszuwählen, daß ein Gradient der Schmelzpunkte der einzelnen Schichten möglich wird. Von besonderem Interesse sind in diesem Zusammenhang Mehrschichtfolien. bei welchen der Schmelzpunkt der Schicht (M) kleiner als der Schmelzpunkt der Schicht (A) und größer als der Schmelzpunkt der Schicht (I) ist. wobei die Schmelzpunkte jeweils für eine einschichtige Folie aus dem Material der jeweiligen Schicht (A), (M) und (I) nach DIN 3146-C1b bestimmt werden. Es versteht sich, daß im Zusammenhang mit der Erfindung von Schmelzpunkten geredet wird, auch wenn teilweise Materialien eingesetzt werden, die keinen scharfen Schmelzpunkt" aufweisen, wie er im klassischen Sinn für kristalline Materialien bekannt ist. Im Zusammenhang mit der Erfindung meint Schmelzpunkt einen Schmelzpunkt im Sinne der Norm DIN 3146-C1b. d.h. einen Übergang im DSC (Differentialscanningkalorimeter).

Besonders bevorzugte Mehrschichtfolien nach der Erfindung zeichnen sich dadurch aus. daß der Schmelzpunkt der Schicht (M) im Bereich von 130 bis 160 °C. vorzugsweise 135 bis 157,5°C, besonders bevorzugt 140 bis 156°C ist. wobei der Schmelzpunkt für eine einschichtige Folie aus dem Material der Schicht (M) gemäß DIN 3146-C1b bestimmt wird. Die Schmelztemperaturen Issen dabei keine direkten Rückschlüsse auf die Erweichung des Materials zu.

Zur Beschreibung des Erweichungsverhaltens kann die Vicat-Temperatur herangezogen werden. Unter Erweichungspunkt oder Erweichungstemperatur versteht man die Temperatur, bei welcher Gläser und amorphe bzw, teilkristalline Polymere vom glasigen oder hartelastischen in einen gummielastischen Zustand übergehen. Eine besondere Ausftihrungsform der erfindungsgemäßen Mehrschichtfolie kann Schichten (A), (M) und (I) mit Vicat-Temperaturen aufweisen. die für die Schicht (M) im Bereich von allgemein 35 bis 75 °C, bevorzugt 35 bis 70°C, vorzugsweise 40 bis 65 °C, ganz besonders bevorzugt 45 bis 60 °C liegen, während die Schichten (A) und (I) Vicat-Temperaturen im Bereich von kleiner oder gleich 121°C aufweisen, jeweils bestimmt nach DIN 53460. Besonders interessant in diesem Zusammenhang ist das Phänomen, daß erfindungsgemäße Mehrschichtfolien einer Heißdampfsterilisierung bei 121°C problemlos widerstehen, obwohl alle Schichten Vicat-Temperaturen von kleiner als 121°C aufweisen können. Unter anderem die üblicherweise während der Heißdampfsterilisierung herrschenden Druckparameter können maßgeblich zum Erhalt der strukturellen Integrität der Folie oder daraus hergestellter Behältnisse während der Behandlung beitragen.

Die erfindungsgemäße Mehrschichtfolie besteht im allgemeinsten Sinne je Schicht zu 60 bis 100 Gewichts-% aus Polypropylenmaterialien und zu 40 bis 0 Gewichtsprozent aus thermoplastischen Elastomeren, vorzugsweise ausgewählt aus der Gruppe der Styrolblockcopolymere.

Zu den einsetzbaren Polyprolyenen oder Polypropylenmaterialien gehören unter anderem Homopolymere des Propylens und Copolymere des Propylens mit bis zu 25 Prozent (w/w) an Ethylen oder eine Mischung (Legierung, Blend) aus Polypropylen mit bis zu 25 Prozent (w/w) Polyethylen. Bei den Copolymeren kann es sich grundsätzlich um statistische (random) Copolymere oder Blockcopolymere handeln.

Sofern als Polypropylenmaterialien Homopoymere des Propylens oder Copolymere des Propylens mit Ethylen zum Einsatz kommen, kann es für bestimmte Ausführungsformen bevorzugt sein, einen Gehalt an Ethyleneinheiten im Bereich von 1 bis 5 Gewichtsprozent, ganz besonders bevorzugt zwischen 1.5 und 3 Gewichtsprozent, noch mehr bevorzugt zwischen 1,6 und 2,5 Gewichtsprozent, jeweils bezogen auf das Gesamtgewicht des Copolymeren. vorzusehen. Insbesonders für die äußere Schicht (A), kann eine entsprechende Struktur als vorteilhaft für Glanz, Transparenz, Klarheit und Bedruckbarkeit angesehen werden. Besonders bevorzugt setzt sich die äußere Schicht so zusammen. daß der Anteil an Ethyleneinheiten im Bereich zwischen 1 und 5 Gewichtsprozent liegt, während das Material der Außenschicht sich ansonsten aus vom Propylen abgeleiteten Einheiten zusammensetzt.

In den einzelnen Schichten der erfindungsgemäßen Mehrschichtfolie kann optional eine untergeordnete Menge eines thermoplastischen Elastomeren enthalten sein. wobei das thermoplastische Elastomere - wie bereits mehrfach erwähnt - vorzugsweise aus der Gruppe der Styrolblockcopolymere ausgewählt ist. Zu anderen im Sinne der Erfindung einsetzbaren thermoplastischen Elastomeren gehören unter anderem Polyetherester (TPE-E), Polyurethane (TPE-U). Polyetheramide (TPE-A) oder auch EPDM/PP-Blends sowie Butylkautschuk/PP-Blends oder thermoplastische Elastomere auf Olefinbasis (TPE-O). EPDM steht für Terpolymere aus Ethylen, Propylen und einem nichtkonjugierten Dien und/oder Ethylen-Alpha-Olefin-Copolymer. Unter Butylkautschuk sind Copolymere des Isobutylens mit Isopren zu verstehen. Es kann ein Vertreter der genannten Gruppen von elastomeren Verbindungen allein eingesetzt werden. Es können Mischungen von zwei oder mehr Verbindungen aus einer einzigen Gruppe verwendet werden oder auch Mischungen von zwei oder mehr Verbindungen aus mehr als einer Gruppe von Verbindungen.

In einer Ausführungsform der Erfindung ist der Einsatz von Blockcopolmeren des Styrols bevorzugt. Zu einsetzbaren Styrolblockcoplymeren gehören neben anderen Styrol-Ethylen/Butylen-Styrol Triblockcopolymere (SEBS), Styrol-Butylen-Styrol Diblockcopolymere (SBS), Styrol-Ethylen/Propylen-Styrol Triblockcopolymere (SEPS), Styrol-Isopren-Styrol Triblockcopolymere (SIS) und Mischungen aus zwei oder mehr der vorgenannten Komponenten. Bevorzugt unter den genannten Styrolblockcopolymeren ist der Einsatz von SEBS. aufgrund der besonderen Eignung dieses thermoplastischen Elastomeren für Anwendungen im Bereich der Medizin.

Der Anteil des thermoplastischen Elastomeren kann von Schicht zu Schicht variieren. Die Mittelschicht (M) weist bevorzugt einen möglichst geringen Anteil an thermoplastischem Elastomer auf. Bevorzugte Bereiche ergeben sich zu 20 bis 0 Gewichtsprozent, besonders zweckmäßig 10 bis 0 Gewichtsprozent. ganz besonders zweckmäßig kleiner als 5 Gewichtsprozent und am meisten bevorzugt ist die Schicht (M) überhaupt frei von thermoplastischem Elastomer. das nicht zu den Polypropylenmaterialien im Sinne der Erfindung gehört. Dementsprechend ist der Anteil an Polypropylenmaterial bevorzugt zwischen 80 bis 100 Gewichtsprozent. noch mehr bevorzugt zwischen 90 und 100 Gewichtsprozent. zweckmäßig größer als 95 Gewichtsprozent und am meisten bevorzugt 100 Gewichtsprozent, jeweils bezogen auf das gesamte Gewicht der Schicht (M).

Auch für den Aufbau der Außenschicht (A) gilt vergleichbares. Die Außenschicht (A) weist bevorzugt einen möglichst geringen Anteil an thermoplastischem Elastomer auf. Bevorzugte Bereiche ergeben sich zu 20 bis 0 Gewichtsprozent, besonders zweckmäßig 10 bis 0 Gewichtsprozent, ganz besonders zweckmäßig kleiner als 5 Gewichtsprozent und am meisten bevorzugt ist die Schicht (A) frei von thermoplastischem Elastomer. Dementsprechend ist der Anteil an Polypropylenmaterial bevorzugt zwischen 80 bis 100 Gewichtsprozent, noch mehr bevorzugt zwischen 90 und 100 Gewichtsprozent, zweckmäßig größer als 95 Gewichtsprozent und am meisten bevorzugt 100 Gewichtsprozent. jeweils bezogen auf das gesamte Gewicht der Schicht (A).

Im Hinblick auf die Zusammensetzung der Innenschicht (I) gilt zunächst auch der Grundsatz. daß ein möglichst geringer Anteil an thermoplastischem Elastomer angestrebt wird. So gilt in einer Ausführungsform der Innenschicht (I) wiederum. daß sich bevorzugte Bereiche zu 20 bis 0 Gewichtsprozent ergeben. besonders zweckmäßig 10 bis 0 Gewichtsprozent, ganz besonders zweckmäßig kleiner als 5 Gewichtsprozent und am meisten bevorzugt ist die Schicht (I) frei von thermoplastischem Elastomer. Dementsprechend ist der Anteil an Polypropylenmaterial aus der Schicht (I) bevorzugt zwischen 80 bis 100 Gewichtsprozent, noch mehr bevorzugt zwischen 90 und 100 Gewichtsprozent. zweckmäßig größer als 95 Gewichtsprozent und am meisten bevorzugt 100 Gewichtsprozent. jeweils bezogen auf das gesamte Gewicht der Schicht (I).

Es kann jedoch für eine gezielte Veränderung von Siegeleigenschaften und Kontrolle der Schweißnähte von gewissem Vorteil sein. etwa 10 bis 30 Gewichtsprozent. bevorzugt 15 bis 25 Gewichtsprozent und besonders zweckmäßig etwa 20 Gewichtsprozent an thermoplastischem Elastomer in der inneren Schicht (I) vorzusehen. Entsprechend liegen die zweckmäßigen Gehalte an Polypropylenmaterialien in der Innenschicht (I) zu 90 bis 70. 85 bis 75 und besonders zweckmäßig zu etwa 80 Gewichtsprozent, jeweils bezogen auf das gesamte Gewicht der Schicht (I).

Aufgrund der vorgenannten Ausführungen ergibt sich eine Ausführungsform von allergrößtem Interesse dann. wenn die Schichten (A) und (M) zu 100 Gewichtsprozent, und die Schicht (I) zu 90 bis 70 Gewichtsprozent aus Polypropylenmaterialien bestehen, jeweils bezogen auf das gesamte Gewicht der jeweiligen Schicht. Besonders bevorzugt ist es dann. wenn die verbleibenden 10 bis 30 Gewichtsprozent der Schicht (I) aus einem oder mehreren SEBS(en) bestehen.

Mithin ist eine besonders zweckmäßige Mehrschichtfolie dadurch gekennzeichnet, daß die Schichten (A), (M) zu 100 Gewichtsprozent und die Schicht (I) zu 60 bis 100 Gewichtsprozent, vorzugsweise zu 70 bis 90 Gewichtsprozent, aus einem oder mehreren Polymeren aus der Gruppe bestehend aus Homopolymeren des Polypropylens (Homo-PP's), statistischen Copolymeren des Polypropylens (Random-Co-PP's), Blockcopolymeren des Polypropylens, flexiblen Homopolymeren des Polypropylens (FPO's), flexiblen Copolymeren des Polypropylens (Co-FPO's) bestehen, während die Schicht (I) daneben zu 40 bis 0 Gewichtsprozent, vorzugsweise zu 30 bis 10 Gewichtsprozent, aus Styrol-Ethylen/Butylen-Styrol-Blockcopolymer (SEBS) besteht.

Von besonderem Interesse für die Realisierung der Erfindung sind solche Homopolymere und vor allem Copolymere des Propylens mit Ethylen, die eine hohe Flexibilität aufweisen. Zu ausgesprochen gut geeigneten Materialien gehören z. B. im Wesentlichen amorphe binäre statistische Copolymere, die aus 10 bis 30 Gewichtsprozent Ethylen und 70 bis 90 Gewichtsprozent Propylen bestehen, wobei die Copolymere einen Taktizitätsindex m/r im Bereich von 3.0 bis 4.0 und einen sogenannten "propylen inversion value" von etwa 0.15 und darunter, bestimmt mittels ¹³C NMR-Messung, besitzen. Statistische Copolymere des Propylens mit Ethylen, die der genannten Spezifikation genügen, sind beispielsweise dadurch erhältlich, dass man bestimmte Katalysatorsysteme zur Polymerisation einsetzt. die unter anderem eine feste Katalysatorkomponente aus Magnesiumhalogenid-Trägerbase und Aluminiumhalogenid sowie Titantetrahalogenid und eine Cokatalysatorkomponente aus Trialkylaluminium und Alkylaluminiumhalogenid aufweisen. Entsprechende Polymere sind beispielsweise Gegenstand der US 4,858,757 vom 22. August 1989. Herstellverfahren offenbaren z.B. die US 4,736.002 sowie die US 4.847,340 vom 5. April 1988 bzw. 11. Juli 1989. Die genannten Patente wurden der Rexene Products Company übertragen.

Die flexiblen Homopolymeren des Propylens (FPO's) sowie die flexiblen Copolymeren des Propylens mit Ethylen (Co-FPO's) der Firma Huntsmann, die unter der geschützten Bezeichnung Rexflex® fpo. erhältlich sind. gehören zu den für die Erfindung besonders bevorzugten Propylenmaterialien.

Bezogen auf die gesamte mehrschichtige Struktur der erfindungsgemäßen Folien ergibt sich nicht zuletzt auch aufgrund der Dickenverhältnisse der Schichten zueinander eine Folie mit einem hohen Gehalt an Polypropylenmaterialien. In einer zweckmäßigen Ausführungsform besteht die erfindungsgemäße Folie zu wenigstens aus 90 Gewichtsprozent Polypropylenmaterialien, bezogen auf das gesamte Gewicht der Mehrschichtfolie. Noch zweckmäßiger sind Folien, die insgesamt zu mehr als 92 Gewichtsprozent, zu 94 Gewichtsprozent oder mehr, zu 96 oder mehr Gewichtsprozent oder zu wenigstens 97.5 Gewichtsprozent aus l'olypropylenmaterialien bestehen.

Besondere erfindungsgemäße Folien weisen folgenden beispielhaften Aufbau auf:
- (A): eine erste oder Außenschicht aus Polypropylencopolymer mit 2 bis 3 Gewichtsprozent Ethyleneinheiten;
- (M): eine zweite oder Mittelschicht aus einem Poylpropylenhomopolymer mit einer definierten Taktizität;
- (I): einer dritten oder Siegelschicht aus einem Blend aus Polypropylen und einem elastomeren Material.

Eine dementsprechende Struktur einer Folie hat sich als besonders günstig für die Herstellung von Behältnissen, Beuteln oder dergleichen erwiesen. die zur Aufbewahrung lipophiler Flüssigkeiten für die parenterale Ernährung gedacht sind.

Besonders zweckmäßig in diesem Sinne sind Folien mit einer folgenden Struktur:
- (A): eine erste oder Außenschicht aus Polypropylencopolymer mit 2 bis 3 Gewichtsprozent Ethyleneinheiten, mit einer Dicke von 10 - 30 µm;
- (M): eine zweite oder Mittelschicht aus einem Poylpropylenhomopolymer mit einer definierten Taktizität und einer Dicke zwischen 100 und 200 µm;
- (I): einer dritten oder Siegelschicht aus einem Blend aus Polypropylen und einem elastomeren Material mit 0 bis 40 Gewichtsprozent, vorzugsweise 10 bis 30 Gewichtsprozent, besonders bevorzugt etwa 20 Gewichtsprozent. jeweils bezogen auf das gesamte Gewicht der Schicht (I) an thermoplastischem Elastomer, vorzugsweise eines thermoplastischen Elastomers auf Basis eines Styrolblockcopolymeren, besonders bevorzugt eines SEBS. mit einer Dicke im Bereich von 20 bis 80 µm.

Ganz besonders zweckmäßig in diesem Sinne sind Folien mit einer der folgenden Strukturen:
- (A): eine erste oder Außenschicht aus Rexene PP 23M10CS264 (Huntsman Corp.), Dicke: etwa 20 µm;
- (M): eine zweite oder Mittelschicht aus Rexflex FPO WL110 (Huntsman Corp.) mit definierter Taktizität und einer Dicke von etwa 140 µm;
- (I): einer dritten oder Siegelschicht aus einem Blend aus 80 Gewichtsprozent Polypropylen und 20 Gewichtsprozent SEBS mit einer Dicke von etwa 40 µm.

Für die Herstellung von Behältnissen für die Lagerung wasserbasierter parenteraler Flüssigkeiten sind unter anderem folgende Folien von ganz besonderem Interesse:
- (A): eine erste oder Außenschicht aus Polypropylenhomopolymer, vorzugsweise aus der Familie der flexiblen Polypropylenhomopolymere;
- (M): eine zweite oder Mittelschicht aus einem Poylpropylencopolymer aus der Familie der flexiblen Polypropylencopolymere mit einem geringen Gehalt an Ethyleneinheiten;
- (I): einer dritten oder Siegelschicht aus einem Blend aus Polypropylen und einem elastomeren Material.

Besonders zweckmäßig in diesem Sinne sind Folien mit einer folgenden Struktur:
- (B): eine erste oder Außenschicht aus Polypropylenhomopolymer mit einer Dicke von 20 - 60 µm:
- (M): eine zweite oder Mittelschicht aus einem Poylpropylencopolymer mit einem Gehalt an Ethyleneinheiten im Bereich von 1 bis 3 Gewichtsprozent und einer Dicke zwischen 60 und 180 µm;
- (I): einer dritten oder Siegelschicht aus einem Blend aus Polypropylen und einem elastomeren Material mit 0 bis 40 Gewichtsprozent. vorzugsweise 10 bis 30 Gewichtsprozent. besonders bevorzugt etwa 20 Gewichtsprozent. jeweils bezogen auf das gesamte Gewicht der Schicht (I) an thermoplastischem Elastomer, vorzugsweise eines thermoplastischen Elastomers auf Basis eines Styrolblockcopolymeren. besonders bevorzugt eines SEBS, mit einer Dicke im Bereich von 20 bis 80 µm.

Ganz besonders zweckmäßig in diesem Sinne sind Folien mit einer folgenden Struktur:
- (A): eine erste oder Außenschicht aus WL113 der Firma Huntsman. Dicke: etwa 30 µm;
- (M): eine zweite oder Mittelschicht aus WL210 der Firma Huntsman mit einem Ethylengehalt von etwa 1.6 Gewichtsprozent und einer Dicke von etwa 130 µm;
- (I): einer dritten oder Siegelschicht aus einem Blend aus 80 Gewichtsprozent Polypropylen und 20 Gewichtsprozent SEBS mit einer Dicke von etwa 30 µm.

Ganz besonders zweckmäßig in diesem Sinne sind auch Folien mit einer folgenden Struktur:
- (A): eine erste oder Außenschicht aus WL113 der Firma Huntsman. Dicke: etwa 50 µm;
- (M): eine zweite oder Mittelschicht aus WL210 der Firma Huntsman mit einem Ethylengehalt von etwa 1,6 Gewichtsprozent und einer Dicke von etwa 90 µm;
- (I): einer dritten oder Siegelschicht aus einem Blend aus 80 Gewichtsprozent Polypropylen und 20 Gewichtsprozent SEBS mit einer Dicke von etwa 50 µm.

Ganz besonders zweckmäßig in diesem Sinne sind außerdem auch Folien mit einer folgenden Struktur:
- (A): eine erste oder Außenschicht aus WL113 der Firma Huntsman. Dicke: etwa 50 µm;
- (M): eine zweite oder Mittelschicht aus WL210 der Firma Huntsman mit einem Ethylengehalt von etwa 1.6 Gewichtsprozent und einer Dicke von etwa 90 µm;
- (I): einer dritten oder Siegelschicht aus einem Polypropylen-Random-Copolymer Z9450 der Firma Fina mit einer Dicke von etwa 50 µm.

Mit der Erfindung ist es insbesonders und in einer besonderen Abwandlung auch möglich, wie bereits geschildert, vollständig, d.h. zu 100 Gewichtsprozent, aus Polypropylenmaterialien bestehende Folien erfolgreich zu verwirklichen. Durch die optionale Einschränkung auf wenigstens 90 Gewichtsprozent Polypropylenmaterialien wird eine ausgezeichnete Verträglichkeit oder Kompatibilität der Schichten untereinander erreicht, so daß keine Haftvermittler oder Haftvermittlungsschichten benötigt werden. Somit wird das Risiko der Delamination der Schichten reduziert.

In bestimmten Maß tragen die Eigenschaften der einzelnen Schichten zu dem überaus vorteilhaften Eigenschaftsspektrum der gesamten Mehrschichtfolie bei, obwohl nicht alle Eigenschaften der Folie direkt von den Eigenschaften der einzelnen Schichten ableitbar sind.

In einer bevorzugten Variante der Erfindung kann die äußere Schicht (A) zur Stabilität der Folie während des Verschweißens beitragen und dem Material die gewünschte Steifigkeit und Streckspannung sowie Schlagzähigkeit vermitteln. Die mittlere Schicht (M) kann der Folie eine geeignete Flexibilität vermitteln, während die innere Schicht (I) peelbare Nähte von unterschiedlicher definierter Stärke ermöglicht. die in Abhängigkeit von Verschweißungsbedingungen wie Temperatur. Druck und Zeit gezielt beeinflußbar sind.

Die erfindungsgemäße Mehrschichtfolie weist bevorzugt drei Schichten auf. Dieser Aufbau ist leicht und einfach zu fertigen und genügt für alle Anwendungszwecke. Dennoch kann man die erfindungsgemäße Folie auch fünflagig, siebenlagig oder mit noch mehr Lagen aufbauen. Besondere Mehrschichtfolien gemäß der Erfindung sind unter anderem. dadurch gekennzeichnet, daß sie aus fünf Schichten mit der Abfolge (A₁-M₁-A₂-M₂-I) oder aus sieben Schichten mit der Abfolge (A₁-M₁-A₂-M₂-A₃-M₃-I) bestehen, wobei sich die Dicke von (M) und (A) als Summe der (Mᵢ) beziehungsweise (Aᵢ) ergibt. Die Dicke insgesamt liegt im oben bereits angebenen Bereich.

Ebenfalls günstig können Folien mit einer Abfolge der Schichten sein. welche folgendem Muster gehorchen: (A₁-M₁-M₂-A₂-I). Diese Struktur erweist sich als besonders vorteilhaft, wenn die Schichten Mᵢ aus flexiblen Homopolymeren des Propylens bestehen.

Die Folie der Erfindung läßt sich nach an sich bekannten Standardverfahren fertigen. Bevorzugte Verfahren zur Herstellung einer Mehrschichtfolie gemäß der Erfindung umfassen. daß man die Schichten (A) bis (1) miteinander coextrudiert oder kaschiert.

Besonders zweckmäßig sind Verfahren. bei welchen man die erfindungsgemäße Folie als Flach- oder Schlauchfolie coextrudiert oder als Flachfolie kaschiert.

Die Herstellung der erfindungsgemäßen Folie wird somit bevorzugt auf an sich bekannte Weise durchgeführt, wobei Bahnen von geeigneter Dimension herstellbar sind. Die Bahnen können dann zur Herstellung von Behältnissen für medizinische Zwecke verwendet werden. Die zu fertigenden Container für medizinische Flüssigkeiten können ein oder mehrere Kompartimente aufweisen Die Herstellung und Befüllung der Beutel oder Behältnisse kann nach einer Vielzahl an sich bekannter Verfahren geschehen.

Die erfindungsgemäße Folie weist ein breites Verwendungsgebiet auf. Zu denkbaren Einsatzmöglichkeiten gehören unter anderem Beutel für die Aufbewahrung von flüssigen Substanzen zur Ernährungen, medizinischen Lösungen oder Flüssigkeiten. Eine bevorzugte Verwendung ist die als Packmittel zur Abfüllung wasserbasierter parenteraler Flüssigkeiten. Andere Verwendungsmöglichkeiten betreffen die zur Abfüllung flüssiger lipophiler Emulsionen, etwa als Packmittel für lipophile medizinische Lösungen.

Konkretere Einsatzmöglichkeiten umfassen die Abfüllung und Lagerung von medizinischen Flüssigkeiten und Lösungen wie Kochsalzlösung. Blut. Blutersatzlösungen, Dialyselösungen, Aminosäurelösungen, Fettlösungen. Emulsionen aber auch pastöse oder viskose, d.h. noch fließfähige, Substanzen.

Nachfolgend wird die Erfindung an Hand von Beispielen und Vergleichsbeispielen eingehender erläutert.

### 1. Methoden zur Bestimmung der physikalischen Parameter der eingesetzten Materialien

Es wurden die nachfolgend aufgeführten physikalischen Parameter für Materialien gemessen oder es wurden tabellierte Werte der Hersteller übernommen. Die Werte wurden für die in der Tabelle 1 angegebenen Materialien in der Art und Weise bestimmt, wie sie in der jeweils in Bezug genommenen Norm angegeben ist.

Sofern die Norm verschiedene Möglichkeiten der Bestimmung zuläßt, wurde jeweils die auf dem entsprechenden Gebiet übliche Variante der Bestimmung eingesetzt. Folgende Vorschriften fanden Anwendung zur Bestimmung der Kenngrößen:
a) MFR in [g/10min] wurde bestimmt nach DIN ISO 1133;
   MFR ist identisch mit MFI (melt index); der Schmelzindex wurde bei 21.6 N Belastung und 230°C ermittelt (früher DIN 53 735:1983-01);
b) die Vicat-Temperatur in [°C] wurde nach DIN ISO 306/A bestimmt;
   es handelt sich hierbei um die Vicat- Erweichungstemperatur, welche derjenigen Temperatur entspricht. bei der ein Stahlstift mit einem kreisförmigen Querschnitt von 1 mm² und einer Länge von mindestens 3 mm unter Aufbringen einer Kraft von 1 kp 1 mm tief senkrecht in den Probekörper eindringt (früher DIN 53 460:1976-12);
c) der Schmelzpunkt wurde in [°C] nach DIN 3146-C1b bestimmt:
   DSC-Messung, Maximum der Schmelzkurve, Aufheizgeschwindigkeit 20 K/min:
d) die Dichte wird in [g/cm³] gegeben, bestimmt gemäß DIN ISO 1183;
e) der E-Modul [MPa] wird in Bezug auf die einzelnen Materialien gemäß DIN ISO 527-1 bis -3 bestimmt: es handelt sich insbesonders um den aus dem Zugversuch bestimmten Elastizitätsmodul, wobei die Auswertung rechnerunterstützt gemäß Anmerkung 1 aus Punkt 4.6 der EN ISO 527-1:1996 durchgeführt wurde. Für Folien. insbesonders Mehrschichtfolien. wurde die Ermittlung in Anlehnung an DIN ISO 527-1 bis -3 durchgeführt. wobei der E-Modul in der in der Kunststofftechnik üblichen Sekanten-Methode ermittelt wurde;
f) Yield (Streckgrenze) in [MPa] wird gemäß DIN ISO 527-1 bis -3 bestimmt:
   Die eingesetzte Prüfgeschwindigkeit betrug immer 200 mm/min (Abziehgeschwindigkeit der Traverse); der Probekörper entsprach dem Typ 2:
g) Dicke der Folien in [µm] gemäß DIN ISO 4593, bei Folien mit einer Dicke von weniger als 0,01 mm gemäß DIN ISO 4591.

Die nachfolgende Tabelle 1 faßt die Ergebnisse der Analyse der physikalischen Parameter für die in den Folien gemäß der Erfindung, für einige Materialien aus Folien gemäß Vergleichsbeispielen sowie für einige nicht in den Beispielen oder Vergleichsbeispielen eingesetzte Materialien zusammen.

**Tabelle I :**

| Kennwerte der in den beispielhaften Folien der Erfindung und in den Folien der Vergleichsbeispiele eingesetzten Materialien | | | | | | |
|---|---|---|---|---|---|---|
| Material | MFR [g/10min] | Vicat [°C] | Schmelzpunkt [°C] | Dichte [g/cm³] | E-Modul [Mpa] | Yield [Mpa] |
| PPC1 | 5 | * | 128 | 0,89 | 480 | 15 |
| PPC2 | 10 | * | 150 | 0,9 | 1055 | 28 |
| PPC3 | 5 | 52 | 148 | 0,89 | 43 | no Yield |
| PPH2 | 8 | 154 | 161-165 | 0,9 | 650-750 | 40-60 |
| PPH3 | 6 | 119 | 160 | 0,89 | 441 | 24 |
| PPH4 | 10 | 102 | 159 | 0,89 | 317 | 12,8 |
| PPT1 | 6.5 | 116 | 132 | 0,89 | 770 | 16 |
| PPT2 | 8 | | 144 | 0,89 | 1100 | 24 |
| PPT3 | 8 | 110 | 138-142 | 0,90-0,91 | 200 | 10,5 |
| PPC1/ TPE1 | 4 | 102 | * | 0,9 | * | * |
| PPH5 | 16 | 63 | 155 | 0,88 | 94 | 6 |
| PPH6 | 5.5 | 67 | 156 | 0,89 | 117 | 7 |
| PPH7 | 6 | 74 | 156 | 0,89 | 131 | 7.7 |
| PPH8 | 1.5 | 64 | 152 | 0,89 | 97 | 6.4 |
| PPH9 | 1.5 | 69 | 154 | 0,89 | 124 | 8 |
| PPH10 | 1.8 | 116 | 158 | 0,89 | 428 | 16 |
| PPH11 | 3.5 | 69 | 155 | 0,89 | 117 | 8 |
| PPC4 | 1.5 | 49 | 145 | 0,88 | 55 | no Yield |
| PPC5 | 8.5 | 50 | 147 | 0,88 | 45 | 5,2 |
| PPC6 | 8 | 122 | 138-142 | 0,90-0,91 | 370 | 5,2 |
| PPC7 | 8 | 153 | 148-154 | 0,90-0,91 | 550 | 5,2 |
| PPH13 | 8 | 152 | 162-166 | 0,90 | 670 | 5,2 |

| | | | | | | |
|---|---|---|---|---|---|---|
| * Laut Herstellerangabe nicht meßbar PPC1: Z9450 der Firma Fina ist ein Polypropylen-Random-Co-Polymer PPC2: PP23M 10cs264 der Firma Huntsman ist ein Polypropylen-Random-Co-Polymer PPC3: WL210 der Firma Huntsman ist ein Polypropylen-Random-Co-Polymer aus der REXflex FPO Polymer Familie mit einem Anteil von 1,6 % Ethyleneinheiten. PPC4: WL203 der Firma Huntsmann ist ein Polypropylen-Random-Co-Polymer aus der REXflex FPO Polymer Familie. PPC5: WL223 der Firma Huntsmann ist ein Polypropylen-Random-Co-Polymer aus der REXflex FPO Polymer Familie. PPC6 KFC2008 der Firma Borealis ist ein Polypropylen-Random-Co-Polymer. PPC7 KFC2004 der Firma Borealis ist ein Polypropylen-Random-Co-Polymer. PPH2: HD601 F der Firma Borealis ist ein Polypropylen-Homopolymer mit mehr als 99,8% Polypropylen Polymer. PPH3: WL113 der Firma Huntsmann ist ein Polypropylen-Homopolymer aus der REXflex FPO Polymer Familie. PPH4: WL107 der Firma Huntsmann ist ein Polypropylen-Homopolymer aus der REXflex FPO Polymer Familie. PPT1 TD 120 H der Firma Borealis ist ein C2/C4 terpolymer mit mehr als 99.7% Polypropylen Copolymer. PPT2 RD 418H-03 der Firma Borealis ist ein C3/C4 Random-Co-Polymer mit mehr als 99,5% Polypropylen Copylmer. PPT3 K2033 der Firma Borealis ist ein heterophasisches Polypropylen Copolymer (RAHECO). PPC1/TPE1 NPP00NP01NA der Firma Ferro Corporation ist ein Compound aus 80 % PPC1 und 20 % TPE1 (w/w) TPE1 Kraton G1652 der Firma Shell Nederland Chemie B.V. ist ein lineares Styrol-(ethylen-buthylen)-styrol-block-copolymer (SEBS). PPH5: WL101 der Firma Huntsmann ist ein Polypropylen-Homopolymer aus der REXflex FPO Polymer Familie. PPH6: WL 102 der Firma Huntsmann ist ein Polypropylen-Homopolymer aus der REXflex FPO Polymer Familie. PPH7: WL110 der Firma Huntsmann ist ein Polypropylen-Homopolymer aus der REXflex FPO Polymer Familie. PPH8: WL111 der Firma Huntsmann ist ein Polypropylen-Homopolymer aus der REXflex FPO Polymer Familie. PPH9: WL114 der Firma Huntsmann ist ein Polypropylen-Homopolymer aus der REXflex FPO Polymer Familie. PPH10: WL116 der Firma Huntsmann ist ein Polypropylen-Homopolymer aus der REXflex FPO Polymer Familie. PPH11: WL117 der Firma Huntsmann ist ein Polypropylen-Homopolymer aus der REXflex FPO Polymer Familie. PPH13: KFC201 der Firma PCD ist ein Polypropylenhomopolymer | | | | | | |

### 2. Herstellung der Folien

Aus den oben beschriebenen Materialien sowie aus gegebenenfalls weiteren nicht in Tabelle 1 angegebenen Materialien wurden auf an sich bekannte Weise Folien hergestellt. Grundsätzlich ging man bei der Herstellung von Flach-Folien oder Schlauch-Folien folgendermaßen vor:

### Flach (Cast) - Folie.

Die PP-Granulate werden über ein Dosiersystem den für die einzelnen Schichten zuständigen Extrudern zugeführt, Mittels Wärme und Friktion werden die Materialien plastifiziert, in einem Verteilerblock in den zuvor beschriebenen Schichtaufbau gebracht und über eine Breitschlitzdüse auf eine wassergekühlte und rotierende Walze gegossen.
Schichtdicken und Gesamtdicke werden über Extruderleistung und Abzugsgeschwindigkeit der Kühlwalze bestimmt.
Die abgekühlte Folie wird auf einer Wickelvorrichtung zu Mutterrollen gewickelt.

### Blas (Schlauch) - Folie wassergekühlt:

Die PP-Granulate werden über ein Dosiersystem den für die einzelnen Schichten zuständigen Extrudern zugeführt. Mittels Wärme und Friktion werden die Materialien plastfiziert, in einem Blaskopf in den zuvor beschriebenen Schichtaufbau gebracht und über eine Runddüse zu einer Blase geformt, die in einer wassergekühlten Kalibriervorrichtung abgekühlt wird.
Schichtdicken und Gesamtdicke werden über Extruderleistung und Abzugsgeschwindigkeit der Abzugsvorrichtung bestimmt. Die abgekühlte Folie wird auf einer Wickelvorrichtung zu Mutterrollen gewickelt.

Es wurden entweder erfindungsgemäße Folien erhalten. welche die in der Tabelle 2 angegebenen Zusammensetzungen und Eigenschaften aufwiesen oder es wurden entsprechende kommerziell erhältliche Folien der Vergleichsbeispiele analysiert:

**Tabelle 2:**

| Zusammensetzung erfindungsgemäßer und nicht erfindungsgemäßer Folien. | | | | | | | | | | | | |
|---|---|---|---|---|---|---|---|---|---|---|---|---|
| Bsp./ Vgl. Nr. | Innenschicht (I) | | | | Mittelschicht (M) | | | | Außenschicht (A) | | | |
| | Gew.- Anteil [%] | Mat. | Dicke [µm] | Dicke Anteil [%] | Gew.- Anteil [%] | Mat. | Dicke [µm] | Dicke Anteil [%] | Gew.- Anteil [%] | Mat. | Dicke [µm] | Dicke Anteil [%] |
| Vgl. 1 | 80 | PPC1 | 19 | 11 | 100 | PEC1 | 132 | 78 | 100 | PET1 | 19 | 11 |
| | 20 | TPE1 | | | | | | | | | | |
| Vgl. 2 | 70 | PPC2 | 53 | 27 | 50 | PPC2 | 110 | 68 | 85 | PPH1 | 32 | 16 |
| | 15 | TPE2 | | | 15 | TPE2 | | | | | | |
| | 15 | TPE3 | | | 35 | TPE3 | | | 15 | TPE3 | | |
| Vgl. 3 | 80 | PPC1 | 40 | 24 | 100 | PPH4 | 100 | 59 | 100 | PPC2 | 30 | 18 |
| | 20 | TPE1 | | | | | | | | | | |
| Bsp. 4 | 80 | PPC1 | 40 | 24 | 100 | PPC3 | 100 | 59 | 100 | PPH3 | 30 | 18 |
| | 20 | TPE1 | | | | | | | | | | |
| Vgl. 5 | 70 | PPC2 | 30 | 18 | 50 | PPC2 | 110 | 68 | 85 | PPH1 | 40 | 24 |
| | 15 | TPE2 | | | 15 | TPE2 | | | | | | |
| | 15 | TPE3 | | | 35 | TPE3 | | | 15 | TPE3 | | |
| Bsp. 6 | 80 | PPC1 | 30 | 16 | 100 | PPC3 | 130 | 68 | 100 | PPH3 | 30 | 16 |
| | 20 | TPE1 | | | | | | | | | | |
| Bsp. 7 | 80 | PPC1 | 50 | 26 | 100 | PPC3 | 90 | 48 | 100 | PPH3 | 50 | 26 |
| | 20 | TPE1 | | | | | | | | | | |
| Bsp. 8 | 100 | PPC1 | 50 | 26 | 100 | PPC3 | 90 | 47 | 100 | PPH3 | 50 | 26 |
| Vgl. 9 | 100 | PPT1 | 50 | 28 | 70 | PPT3 | 100 | 56 | 100 | PPT2 | 30 | 17 |
| | | | | | 30 | PPC3 | | | | | | |
| Vgl. 10 | 100 | PPT1 | 50 | 28 | 30 | PPT3 | 100 | 56 | 100 | PPT2 | 30 | 17 |
| | | | | | 70 | PPC3 | | | | | | |
| Vgl. 11 | 100 | PPT1 | 50 | 28 | 30 | PPT3 | 100 | 56 | 100 | PPH2 | 30 | 17 |
| | | | | | 70 | PPC3 | | | | | | |
| Bsp. 12 | 80 | PPC1 | 40 | 20 | 100 | PPH7 | 140 | 70 | 100 | PPC2 | 20 | 10 |
| | 20 | TPE1 | | | | | | | | | | |
| Bsp.13 | 100 | PPC6 | 40 | 20 | 100 | PPH7 | 140 | 70 | 100 | PPC7 | 20 | 10 |
| Vgl. 14 | 80 | PPC1 | 154 | 77 | 100 | TPE2 | 20 | 10 | 100 | PET2 | 26 | 13 |
| | 20 | TPE1 | | | | | | | | | | |
| Vgl. 15 | 100 | PPH 13 | 25 | 12.5 | 20 | PPH 12 | 125 | 62,5 | 70 | PPH 12 | 50 | 25 |
| | | | | | 50 | TPE1 | | | | | | |
| | | | | | 30 | PZ1 | | | 30 | TPE | | |
| Bsp. 16 | 80 | PPC1 | 40 | 20 | 100 | PPCo1 | 140 | 70 | 100 | PPC7 | 20 | 10 |
| | 20 | TPE1 | | | | | | | | | | |
| Bsp. 17 | 80 | PPC1 | 40 | 20 | 100 | PPT4 | 140 | 70 | 100 | PPC2 | 20 | 10 |
| | 20 | TPE1 | | | | | | | | | | |
| Bsp. 18 | 80 | PPC1 | 40 | 20 | 80 | PPT3 | 140 | 70 | 100 | PPC7 | 20 | 10 |
| | 20 | TPE1 | | | 20 | PPC8 | | | | | | |
| Vgl. bedeutet Vergleichsbeispiel: insbesonders beziehen sich Vgl. 1 auf eine kommerziell vom Hersteller Cryovac erhältliche Folie mit dem Kürzel M312, von deren Aufbau angenommen wird. dass er durch die US 4.643.926 oder die EP 0 199 871 offenbart wird: Vgl. 14 auf eine kommerziell unter dem Handelsnamen Excel® von der Fa. B. Braun McGaw erhältliche Folie gemäß EP 0 228 819: Vgl. 15 auf eine kommerziell von der Firma Sengewald erhältliche Folie. von deren Aufbau angenommen wird, dass durch die DE 196 40 038 A1 abgedeckt wird: Bsp. steht für erfindungsgemäßes Beispiel; PPH1: 41E4cs278 der Firma Huntsman ist ein Polypropylen-Homopolymer. TPE2 Kraton G1657 der Firma Shell Nederland Chemie B.V. und ist ein lineares Styrol-(ethylen-buthylen)-styrol-block-copolymer (SEBS). TPE3 Tuftec H1085L der Firma Asahi Chemical Industry Co ist ein Hydrogenated Styrene Butadiene Block Copolymer. PEC1 SLP 9069 der Firma Exxon Chemical ist ein Ethylen-alpha-olefm. PET1 Ecdel 9965 der Firma Eastman Chemical Company ist ein Copolyester-Äther. PET2 Copolyester-Material. PPH12 Polypropylen-Homopolymer. PZ1 medizinisches Weißöl. PPT4 ROBY P0004967 der Firma Montell (Basell) ist ein heterophasisches Polypropylen Copolymer. PPC8 Engage 8200 der Firma Dow ist ein Polyolefincopolymer. PPCo1 XS 115 der Firma Ferro ist ein Compound aus Random-Copolymer /EVA / heterophasischem Polypropylen | | | | | | | | | | | | |

### 3. Bestimmung der Eigenschaften der Folien:

Die kommerziell erhältlichen Folien wurden ebenso wie die beispielhaften Folien der Erfindung oder andere zu Vergleichszwecken selbst hergestellte Folien hinsichtlich des Zug-Dehnungsverhaltens gemäß DIN-ISO 527-1 bis -3 untersucht. Die Ergebnisse dieser Versuche sind in Tabelle 3 dargestellt.

**Tabelle 3:**

| Ergebnisse der Zug-Dehnungsversuche für erfindungsgemäße steriliserte Folien sowie steriliserte Vergleichsfolien: | | | | |
|---|---|---|---|---|
| Beispiele & Vergleiche | E-Modul (Mpa) in N/mm² DIN ISO 527-1bis 3 | | Steckgrenze in N/mm² DIN ISO 527-1bis 3 | |
| | MD | TD | MD | TD |
| Vgl.1 | 99.03 | 98.01 | Keine | Keine |
| Vgl.2 | 382.35 | 171,39 | 18.6 | Keine |
| Vgl.3 | 87.8 | 119.9 | 11.6 | 10.2 |
| Bsp.4 | 187.22 | 275.54 | Keine | Keine |
| Vgl.5 | 325.48 | 241,13 | 14.17 | 14,88 |
| Bsp.6 | 191.01 | 170.44 | Keine | Keine |
| Bsp.7 | 109,41 | 93.1 | Keine | Keine |
| Bsp.8 | 212.08 | 191,78 | Keine | Keine |
| Vgl.9 | 403.75 | 421.55 | 20.04 | 19.39 |
| Vgl. 10 | 347.27 | 354.57 | 16.74 | 16.75 |
| Vgl. 11 | 400.51 | 375,92 | 17.97 | 16,44 |
| Bsp. 12 | 195.74 | 158,25 | Keine | Keine |
| Bsp. 13 | 166.55 | 183,70 | Keine | Keine |
| Vgl. 14 | 377.7 | 293.8 | 18.69 | 16.53 |
| Vgl. 15 | 311.0 | 250.1 | 15.84 | Keine |
| Bsp. 16 | 72.43 | 56.04 | Keine | Keine |
| Bsp. 17 | 187,66 | 119.34 | Keine | Keine |
| Bsp. 18 | 246.74 | 148.71 | Keine | Keine |
| MD bedeutete in Maschinenrichtung gemessen. TD steht für die Messungen transversal zur Maschinenrichtung | | | | |

Man erkennt, dass erfindungesgemäße Folien weder in Maschinenrichtung noch in dazu transversaler Direktion eine Streckgrenze aufweisen. Mit Ausnahme eines einzigen Vergleichsbeispiels (Vgl.1) weisen alle anderen Vergleichsbeispiele eine Streckgrenze in beiden Richtungen (sowohl MD als auch TD), wie etwa Vgl.5 oder 14. oder nur in Maschinenrichtung (MD) auf. wie etwa Vgl. 2 oder Vgl.15. Das Vgl. 1. das keinerlei Streckgrenze im sterilisierten Zustand aufweist. verfügt jedoch über einen nachteiligen Materialmix (Polyester-Aussenschicht). Insofern stellt die Erfindung erstmalig Folien für medizinische Lösungen zur Verfügung, die ausschließlich aus Polyolefinmaterialien, optional mit geringen Anteilen an Kautschukmaterialien, bestehen und die eine hervorragende Steifigkeit und Streckspannung mit exzellenter Schlagzähigkeit paaren. Somit können PVC und PET gänzlich vermieden werden ohne auf deren mechanische Eigenschaften zu verzichten.

### 4. Herstellung von Beuteln aus den Folien

Eine Auswahl der erfindungsgemäßen Folien sowie von Vergleichsmaterialien diente zur Herstellung von Verpackungsbeuteln für flüssige. medizinische Produkte. Diese sogenannten i.v. bags wurden folgendermaßen hergestellt:
Aus den wie hierin oben beschrieben erhaltenen Folien werden Proben auf entsprechende Längen zurechtgeschnitten und mittels Wärmekontaktschweißens an allen Seiten zu einem Beutel mit zwei flexiblen Schlauchanschlüssen unlösbar miteinander geschweißt. Die beiden Schlauchanschlüsse werden mit steckbaren Konnektoren dicht verschlossen.
Die Folien werden durch beheizte Schweißbalken in einer Schweißvorrichtung geschweißt. Die Parameter für Temperatur, Zeit und Flächenpressung bei der Schweißung sind in wenigen orientierenden Versuchen zu ermitteln.
Die nach der Schweißung fertigen Beutelproben waren jeweils mit 1 Litern Wasser befüllt. Die fertigen. befüllten Beutel wurden sterilisiert. Die Sterilisation erfolgte in einem Autoklaven bei 121°C während 15 bis 30 min. unter Naßdampf (Heißwasserberieselungsverfahren).

### 5. Methoden für die Untersuchung der physikalischen Eigenschaften der Beutel:

a) Falltest
Die Beutel müssen nach DIN 58363 - 15 (Infusionsbehältnisse u. Zubehör) einen Fall auf eine harte. nicht federnde Platte mit glatter Oberfläche unbeschadet überstehen. Es gelten je nach Füllmenge die folgenden in Tabelle 4 beschriebenen Anforderungen:

**Tabelle 4:**

| Anforderungen des Falltests nach DIN 58363-15 | |
|---|---|
| Nennfüllmenge in **ml** | Fallhöhe in **m** bei Raumtemperatur |
| bis 750 | 2,0 |
| über 750 bis 1500 | 1,5 |
| über 1500 bis 2500 | 1,0 |
| über 2500 | 0,5 |

Die Prüfung ist bestanden, wenn bei Sichtprüfung kein Beutel zu Bruch geht und keine Flüssigkeit austritt.
b) Druckmanschettentest
Beim Druckmanschettentest handelt es sich um eine anwendungsbezogene Prüfung. die bei Druckinfusionen und Patienten-Monitoring wie folgt angewendet wird:
Für eine Druckinfusion müssen Infusionsbeutel einem Überdruck von ca. 400 mm Hg für ca. 1 Std. in den Handelsüblichen Druckmanschetten standhalten.
Für das Monitoring am Patienten müssen die Beutel einen Überdruck von 39.996,71 Pa (300 mm Hg) während 7 Tagen bei einer Temperatur von 20-28 °C standhalten. Erhöhte Überdrücke bis zu 53.328,95 Pa (400 mm Hg) können kurzfristig für ca. 1 Std. auftreten.

Die gemäß 4. erhaltenen Beutel wurden einem Falltest gemäß 5a) sowie einem Druckmanschettentest gemäß 5b) unterzogen. Beutel aus erfindungsgemäßen Folien bestanden die Prüfungen 5a) und 5b) ohne Beanstandungen. während es bei Beuteln aus nicht erfindungsgemäßen Folien zu teilweisem Versagen kommen konnte.

### 6. Vergleich der Eigenschaften von Beispiel 12 und Vergleichsbeispiel 14

Beide Folien weisen dieselben Materialien für die Innenschicht (I) oder Siegelschicht auf. unterscheiden sich jedoch hinsichtlich der Materialien der mittleren Schicht (M) und äußeren Schicht (A).

Zunächst wurden die Verarbeitbarkeit und die Zug/Dehnungseigenschaften der beiden Folien verglichen. Mit beiden Folien kann man Schweißverbindungen unterschiedlicher Stärke erzeugen, indem die Schweißtemperatur verändert wird. Bei niedrigen Schweißtemperaturen. d.h. 116-118°C werden peelbare Nähte erhalten. während man bei höheren Schweißtemperaturen. d.h. 126 bis 130°C permanente Siegelnähte erhält. Die Breite des Verarbeitungsfensters für Kontumähte kann bestimmt werden, indem man Beutel bei verschiedenen Schweißbedingungen (Druck. Temperatur. Zeit) fertigt, sie mit Wasser befüllt. sterilisiert und dann einem Falltest unterzieht. Wenn die Schweißnaht aufbricht zeigt das an. daß die Schweißtemperatur falsch war. Falls die Folie reißt. zeigt dies an, daß die Schlagzähigkeit des Materials zu gering war. Die Ergebnisse dieser Untersuchungen sind in Tabelle 5 angegeben:

**Tabelle 5:**

| Ergebnisse von Falltests | | | | | |
|---|---|---|---|---|---|
| Größe Beutel [ml] | Schweiß-temperatur [°C] | Höhe [m] | Autoklaviert [Ja/Nein] | bestanden/ gesamt [Bsp.12] | bestanden/ gesamt [Vgl.14] |
| 500 | 126 | 2,0 | ja | 40/40 | 39/40 |
| 500 | 128 | 2,0 | ja | 40/40 | 40/40 |
| 500 | 130 | 2,0 | ja | 40/40 | 38/40 |
| 1000 | 130 | 1,5 | ja | 5/5 | 4/5 |
| 1000 | 130 | 1,5 | nein | 5/5 | 5/5 |

Die Ergebnisse aus der Tabelle 5 belegen klar, daß das Verarbeitungsfenster für eine gewerbliche Produktion weit genug ist und daß die Folie auch nach einer Sterilisationsbehandlung ihre Eigenschaften beibehält. Außerdem sind ihre Eigenschaften gleich oder besser als die Eigenschaften einer bekannten Polyester einsetzenden Folie (Vgl. 14). Insbesondere sind Folien gemäß Beispiel 12 und Vergleichsbeispiel 14 in gefülltem Zustand gleich flexibel. Darüberhinaus genügt die Folie gemäß Bsp. 12 der Europäischen Pharmacopoeia (Ph Eur. 3.2.7 und andere). Die Wasserdampfdurchlässigkeit der Beispielfolie ist so groß. daß die Lagerzeit für Produkte in Behältern aus der Folie wenigstens ein Jahr Lagerung beträgt. Die erfindungsgemäße Folie ist vor und nach der Sterilisationsbehandlung ausgezeichnet transparent. Bei allem jedoch ist der Preis für die Rohstoffe (Polymermaterialien) zur Herstellung der Folie aus Beispiel 12 nur etwa halb so hoch wie der Preis für die Rohstoffe zur Folie gemäß Vgl. 14. Dies ist im Wesentlichen auf eine insgesamt niedrigere Menge an SEBS sowie auf eine Verringerung der Compoundierungsschritte vor der Extrusion zurückzuführen.

## Patentansprüche

1. Autoklavierbare. PVC-freie Mehrschichtfolie, insbesonders für die Verpackung von flüssigen, medizinischen Produkten, aufweisend wenigstens drei Schichten, nämlich eine Außenschicht (A). eine Innenschicht (I) und eine dazwischen angeordnete Mittelschicht (M). von denen jede zu 60 bis 100 Gewichtsprozent aus Polypropylenmaterialien und zu 40 bis 0 Gewichtsprozent aus einem thermoplastischen Elastomer besteht. wobei sich die Gewichtsangaben jeweils auf das Gesamtgewicht der jeweiligen Schicht beziehen.
**dadurch gekennzeichnet, daß**
die Mehrschichtfolie nach einer Heißdampfsteriliserung bei 121°C oder höheren Temperaturen im Heißwasserberieselungsverfahren keine nach DIN EN ISO 527-1 bis -3 meßbare Streckgrenze (no yield) aufweist.

2. Mehrschichtfolie nach Anspruch 1. **dadurch gekennzeichnet. daß** der Anteil der Dicke der Mittelschicht (M) an der Gesamtdicke der Folie im Bereich zwischen 40 und 80 % ist.

3. Mehrschichtfolie nach Anspruch 1, **dadurch gekennzeichnet, daß** der Anteil der Dicke der Mittelschicht (M) an der Gesamtdicke der Folie im Bereich zwischen 45 und 75 % oder im Bereich zwischen 60 und 80 % ist.

4. Mehrschichtfolie nach einem oder mehreren der vorhergehenden Ansprüche, **dadurch gekennzeichnet, daß** der Anteil der Dicke der Außenschicht (A) an der Gesamtdicke der Folie im Bereich zwischen 30 und 7,5 % ist.

5. Mehrschichtfolie nach einem oder mehreren der vorhergehenden Ansprüche, **dadurch gekennzeichnet, daß** der Anteil der Dicke der Innenschicht (I) an der Gesamtdicke der Folie im Bereich zwischen 30 und 12,5 % ist.

6. Mehrschichtfolie nach einem oder mehreren der vorhergehenden Ansprüche, **dadurch gekennzeichnet, daß** die Gesamtdicke der Folie im Bereich zwischen 120 und 300 µm, vorzugsweise zwischen 150 und 250 µm, besonders bevorzugt zwischen 170 und 230 µm ist.

7. Mehrschichtfolie nach einem oder mehreren der vorhergehenden Ansprüche 1 bis 6. **dadurch gekennzeichnet, daß** der E-Modul des Materials der Mittelschicht (M) kleiner oder gleich 250 MPa. vorzugsweise kleiner oder gleich 150 MPa, bevorzugt kleiner oder gleich 135 MPa, besonders bevorzugt kleiner oder gleich 100 MPa ist, jeweils gemessen nach DIN EN ISO 527-1 bis -3.

8. Mehrschichtfolie nach einem oder mehreren der vorhergehenden Ansprüche. **dadurch gekennzeichnet, daß** das Material der Mittelschicht (M) nach einer Heißdampfsteriliserung bei 121°C oder höheren Temperaturen im Heißwasserberieselungsverfahren, vorzugsweise auch vor einer entsprechenden Heißdampfsteriliserung, keine nach DIN EN ISO 527-1 bis -3 meßbare Streckgrenze (no yield) aufweist. bei einem Probekörper Typ 2 und einer Abziehgeschwindigkeit von 200mm/min.

9. Mehrschichtfolie nach einem oder mehreren der vorhergehenden Ansprüche 1 bis 7, **dadurch gekennzeichnet, daß** das Material der Mittelschicht (M) eine nach DIN EN ISO 527-1 bis-3 meßbare Streckgrenze von kleiner oder gleich 8 MPa aufweist. bei einem Probekörper Typ 2 und einer Abziehgeschwindigkeit von 200mm/min.

10. Mehrschichtfolie nach einem oder mehreren der vorhergehenden Ansprüche 1 bis 9, **dadurch gekennzeichnet, daß** der E-Modul des Materials der Außenschicht (A) größer als 250 MPa. vorzugsweise größer als 300 MPa. besonders bevorzugt größer als 400 MPa ist, jeweils gemessen nach DIN EN ISO 527-1 bis -3.

11. Mehrschichtfolie nach einem oder mehreren der vorhergehenden Ansprüche, **dadurch gekennzeichnet, daß** der Schmelzpunkt der Schicht (A) größer als der Schmelzpunkt der Schicht (I) ist. wobei die Schmelzpunkte jeweils für eine einschichtige Folien oder Probekörper aus dem Material der jeweiligen Schicht (A) und (I) nach DIN 3146-C1b bestimmt sind.

12. Mehrschichtfolie nach Anspruch 11, **dadurch gekennzeichnet. daß** der Schmelzpunkt der Schicht (M) kleiner als der Schmelzpunkt der Schicht (A) und größer als der Schmelzpunkt der Schicht (I) ist, wobei die Schmelzpunkte jeweils für eine einschichtige Folie oder Probekörper aus dem Material der jeweiligen Schicht (A), (M) und (I) nach DIN 3146-C1b bestimmt sind.

13. Mehrschichtfolie nach einem oder mehreren der vorhergehenden Ansprüche, **dadurch gekennzeichnet, daß** der Schmelzpunkt der Schicht (M) im Bereich von 130 bis 160 °C, vorzugsweise 135 bis 157,5°C. besonders bevorzugt 140 bis 156 °C ist, wobei der Schmelzpunkt für eine einschichtige Folie oder einen Probekörper aus dem Material der Schicht (M) gemäß DIN 3146-C1b bestimmt ist.

14. Mehrschichtfolie nach einem oder mehreren der vorhergehenden Ansprüche, **dadurch gekennzeichnet, daß** die Schichten (A), (M) und (I) Vicat-Temperaturen aufweisen, die für die Schicht (M) im Bereich von 35 bis 75°C, zweckmäßig 35 bis 70 °C vorzugsweise 40 bis 65 °C, besonders bevorzugt 45 bis 60 °C liegen, während die Schichten (A) und (I) Vicat-Temperaturen im Bereich von kleiner oder gleich 121°C aufweisen.

15. Mehrschichtfolie nach einem oder mehreren der vorhergehenden Ansprüche, **dadurch gekennzeichnet, daß** die Schichten (A), (M) zu 100 Gewichtsprozent und die Schicht (I) zu 60 bis 100 Gewichtsprozent, vorzugsweise zu 70 bis 90 Gewichtsprozent, aus einem oder mehreren Polymeren aus der Gruppe bestehend aus Homopolymeren des Polypropylens (Homo-PP's), statistischen Copolymeren des Polypropylens (Random-Co-PP's), Blockcopolymeren des Polypropylens, flexiblen Homopolymeren des Polypropylens (FPO's), flexiblen Copolymeren des Polypropylens (Co-FPO's) bestehen, während die Schicht (I) daneben zu 40 bis 0 Gewichtsprozent, vorzugsweise zu 30 bis 10 Gewichtsprozent, aus Styrol-Ethylen/Butylen-Styrol-Blockcopolymer (SEBS) besteht.

16. Mehrschichtfolie nach einem oder mehreren der vorhergehenden Ansprüche, **dadurch gekennzeichnet, daß** sie aus fünf Schichten mit der Abfolge (A₁-M₁-A₂-M₂-I) oder (A₁-M₁-M₂-A₂-I) oder aus sieben Schichten mit der Abfolge (A₁-M₁-A₂-M₂-A₃-M₃-I) besteht. wobei sich die Dicke von (M) und (A) als Summe der (Mᵢ) beziehungsweise (Aᵢ) ergibt.

17. Verfahren zur Herstellung einer Mehrschichtfolie gemäß einem oder mehreren der vorhergehenden Ansprüche, bei welchem man die Schichten (A) bis (I) miteinander coextrudiert oder kaschiert.

18. Verfahren gemäß Anspruch 19. **dadurch gekennzeichnet, daß** man die Folie als Flach- oder Schlauchfolie coextrudiert oder als Flachfolie kaschiert.

19. Verwendung einer Folie gemäß den Ansprüchen 1 bis 18 als Packmittel zur Abfüllung oder Lagerung wasserbasierter parenteraler Flüssigkeiten.

20. Verwendung einer Folie gemäß den Ansprüchen 1 bis 18 als Packmittel zur Abfüllung oder Lagerung flüssiger lipophiler Emulsionen.

## Claims

1. Autoclavable PVC-free multilayer film, to be especially used for packing liquid medicinal products, having at least three layers, namely an outer layer (A), an inner layer (I) and an interposed intermediate layer (M), each of which consists of 60 to 100 percent by weight of polypropylene material and 40 to 0 percent by weight of a thermoplastic elastomer, the weight indications relating to the total weight of the respective layer,
**characterised by** the fact that
after superheated steam sterilisation at 121°C or higher temperatures in the hot-water trickle process, the multilayer film does not have a yield point measurable according to DIN EN ISO 527-1 to -3.

2. Multilayer film according to claim 1 **characterised by** the fact that the proportion of the thickness of the intermediate layer (M) in relation to the total film thickness lies in the range of 40 to 80%.

3. Multilayer film per according to claim 1 **characterised by** the fact that the proportion of the thickness of the intermediate layer (M) in relation to the total film thickness lies in the range of 45 to 75% or in the range of 60 to 80%.

4. Multilayer film according to any of the preceding claims **characterised by** the fact that the proportion of the thickness of the outer layer (A) in relation to the total film thickness lies in the range of 30 to 7.5%.

5. Multilayer film according to any of the preceding claims **characterised by** the fact that the proportion of the thickness of the inner layer (I) in relation to the total film thickness lies in the range of 30 to 12.5%.

6. Multilayer film according to any of the preceding claims **characterised by** the fact that the total thickness of the film is in the range of 120 to 300 µm, preferably between 150 and 250 µm, particularly preferred between 170 and 230 µm.

7. Multilayer film according to any of the preceding claims 1 to 6, **characterised by** the fact that the e-module of the material of the intermediate layer (M) is 250 MPa or less, preferably 150 MPa or less, preferably 135 MPa or less, particularly preferred 100 MPa or less, in each case measured in accordance with DIN EN ISO 527-1 to -3.

8. Multilayer film according to any of the preceding claims **characterised by** the fact that after superheated steam sterilisation at 121°C or higher temperatures in the hot-water trickle process, preferably also before a corresponding superheated steam s terilisation, the m aterial o f the i ntermediate layer (M) does not have a yield point measurable according to DIN EN ISO 527-1 to -3 on a type 2 test piece and at a stripping speed of 200 mm/min.

9. Multilayer film according to any of claims 1 to 7 **characterised by** the fact that the material of the intermediate layer (M) has a yield point measurable according to DIN EN ISO 527-1 to -3 of 8 MPa or less, on a type 2 test piece and at a stripping speed of 200 mm/min.

10. Multilayer film according to any of claims 1 to 9 **characterised by** the fact that the e-module of the material of the outer layer (A) is more than 250 MPa, preferably more than 300 MPa, particularly preferred more than 400 MPa, in each case measured to DIN EN ISO 527-1 to -3.

11. Multilayer film according to any of the preceding claims **characterised by** the fact that the melting point of layer (A) is higher than the melting point of layer (I) whereby the melting points are in each case determined for a single-layer film or test piece of the material of the respective layer (A) and (I) in accordance with DIN 3146-C1b

12. Multilayer film according to claim 11 **characterised by** the fact that the melting point of layer (M) is lower than the melting point of layer (A) and higher than the melting point of layer (I) whereby the melting points are in each case determined for a single-layer film or test piece of the material of the respective layer (A), (M) and (I) in accordance with DIN 3146-C1b.

13. Multilayer film according to any of the preceding claims **characterised by** the fact that the melting point of layer (M) is in the range 130 to 160°C, preferably 135 to 157,5°C, particularly preferred 140 to 156°C, whereby the melting point is determined for a single-layer film or a test piece of the material of layer (M) in accordance with DIN 3146-C1b.

14. Multilayer film according to any of the preceding claims **characterised by** the fact that the layers (A), (M) and (I) have Vicat temperatures which for layer (M) are in the range 35 to 75°C, usefully 35 to 70°C preferably 40 to 65°C, particularly preferred 45 to 60°C, while layers (A) and (I) have Vicat temperatures in the range of 121°C or less.

15. Multilayer film according to any of the preceding claims **characterised by** the fact that layers (A), (M) consist of 100 percent by weight and layer (I) consists of 60 to 100 percent by weight, preferably 70 to 90 percent by weight of one or more polymers from the group comprising homopolymers of polypropylene (homo-PPs), statistical copolymers of polypropylene (random co-PPs), block copolymers of polypropylene, flexible homopolymers of polypropylene (FPOs), flexible copolymers of polypropylene (co-FPOs), while layer (I) consists of 40 to 0 percent by weight, preferably 30 to 10 percent by weight of styrene-ethylene / butylene-styrene block copolymer (SEBS).

16. Multilayer film according to any of the preceding claims **characterised by** the fact that it comprises five layers in the sequence (A₁-M₁-A₂-M₂-I) or (A₁-M₁-M₂-A₂-I) or seven layers in the sequence (A₁-M₁-A₂-M₂-A₃-M₃-I), whereby the thickness of (M) and (A) is the total of (Mᵢ) or (Aᵢ).

17. Process for the manufacture of a multilayer film according to any of the preceding claims whereby the layers (A) to (I) are co-extruded or laminated together.

18. Process according to claim 19 **characterised by** the fact that the film is co-extruded as a flat or tubular film or laminated as a flat film.

19. Use of a film according to claims 1 to 18 as packing material for packing or storing water-based parenteral liquids.

20. Use of a film according to claims 1 to 18 as packaging material for packing or storing liquid lipophilic emulsions.

## Revendications

1. Feuille multicouche exempte de PVC, autoclavable, en particulier pour l'emballage de produits médicaux liquides, présentant au moins trois couches, à savoir une couche externe (A), une couche interne (I) et une couche intermédiaire (M) disposée entre ces deux couches, dont 60 à 100 pour-cent en poids desdites feuilles sont constitués de polypropylènes et 40 à 0 pour-cent en poids d'un élastomère thermoplastique, les indications de poids se rapportant dans tous les cas au poids total de la couche correspondante,
**caractérisée en ce que**
la feuille multicouche ne présente pas de point de fluage (no yield) mesurable selon DIN EN ISO 527-1 à 3 après une stérilisation à la vapeur surchauffe à 121°C ou à des températures supérieures dans le procédé par ruissellement d'eau chaude.

2. Feuille multicouche selon la revendication 1, **caractérisée en ce que** la part de l'épaisseur de la couche intermédiaire (M) dans l'épaisseur totale de la feuille se situe dans un domaine compris entre 40 et 80 %.

3. Feuille multicouche selon la revendication 1, **caractérisée en ce que** la part de l'épaisseur de la couche intermédiaire (M) dans l'épaisseur totale de la feuille se situe dans un domaine compris entre 44 et 75% ou dans un domaine compris entre 60 et 80%.

4. Feuille multicouche selon une ou plusieurs des revendications qui précèdent, **caractérisée en ce que** la part de l'épaisseur de la couche externe (A) dans l'épaisseur totale de la feuille se situe dans un domaine compris entre 30 et 7,5%.

5. Feuille multicouche selon une ou plusieurs des revendications qui précèdent, **caractérisée en ce que** la part de l'épaisseur de la couche interne (I) dans l'épaisseur totale de la feuille se situe dans un domaine compris entre 30 et 12,5 %.

6. Feuille multicouche selon une ou plusieurs des revendications qui précèdent, **caractérisée en ce que** l'épaisseur totale de la feuille se situe dans un domaine compris entre 120 et 300 µm, de manière préférentielle entre 150 et 250 µm, et de manière particulièrement préférentielle entre 170 et 230 µm.

7. Feuille multicouche selon une ou plusieurs des revendications 1 à 6, **caractérisée en ce que** le module d'élasticité du matériau de la couche intermédiaire (M) est inférieur ou égal à 250 MPa, de manière préférentielle est inférieur ou égal à 150 MPa, et de manière plus préférentielle encore est inférieur ou égal à 135 MPa, et de manière particulièrement préférentielle est inférieur ou égal à 100 MPa, ces valeurs étant mesurées selon DIN EN ISO 527-1 à 3 dans tous les cas.

8. Feuille multicouche selon une ou plusieurs des revendications qui précèdent, **caractérisée en ce que** le matériau de la couche intermédiaire (M) ne présente pas de point de fluage (no yield) mesurable selon DIN EN ISO 527-1 à 3 après une stérilisation à la vapeur surchauffe à 121°C ou à des températures supérieures dans le procédé par ruissellement d'eau, de manière préférentielle également avant une stérilisation à la vapeur surchauffée correspondante, pour une éprouvette de type 2 et une vitesse d'extraction de 200 mm/min.

9. Feuille multicouche selon une ou plusieurs des revendications 1 à 7, **caractérisée en ce que** le matériau de la couche intermédiaire (M) présente un point de fluage inférieur ou égal à 8 MPa mesurable selon DIN EN ISO 527-1 à 3, pour une éprouvette de type 2 et une vitesse d'extraction de 200 mm/min.

10. Feuille multicouche selon une ou plusieurs des revendications 1 à 9, **caractérisée en ce que** le module d'élasticité du matériau de la couche externe (A) est supérieur à 250 MPa, de manière préférentielle à 300 MPa et de manière particulièrement préférentielle est supérieur à 400 MPa, ces valeurs étant mesurées selon DIN EN ISO 527-1 à 3 dans tous les cas.

11. Feuille multicouche selon une ou plusieurs des revendications qui précèdent, **caractérisée en ce que** le point de fusion de la couche (A) est supérieur au point de fusion de la couche (I), les points de fusion étant définis dans tous les cas pour une feuille monocouche ou des éprouvettes tirées du matériau de la couche (A) et (I) correspondante selon DIN 3146-C1b.

12. Feuille multicouche selon la revendication 11, **caractérisée en ce que** le point de fusion de la couche (M) est inférieur au point de fusion de la couche (A) et supérieur au point de fusion de la couche (I), les points de fusion étant définis dans tous les cas pour une feuille monocouche ou des éprouvettes tirées du matériau de la couche (A), (M) et (I) correspondante selon DIN 3146-C1b.

13. Feuille multicouche selon une ou plusieurs des revendications qui précèdent, **caractérisée en ce que** le point de fusion de la couche (M) se situe dans un domaine compris entre 130 et 160 °C, de manière préférentielle entre 135 et 157,5 °C, de manière particulièrement préférentielle entre 140 et 156 °C, le point de fusion étant défini pour une feuille monocouche ou une éprouvette tirée du matériau de la couche (M) selon DIN 3146-C1b.

14. Feuille multicouche selon une ou plusieurs des revendications qui précèdent, **caractérisée en ce que** les couches (A), (M) et (I) présentent des températures de Vicat qui se situent pour la couche (M) dans un domaine compris entre 35 et 75 °C, de manière efficace entre 35 et 70 °C, de manière préférentielle entre 40 et 65 °C, de manière particulièrement préférentielle entre 45 et 60 °C, tandis que les couches (A) et (I) présentent des températures de Vicat dans un domaine inférieur ou égal à 121°C.

15. Feuille multicouche selon une ou plusieurs des revendications qui précèdent, **caractérisée en ce que** les couches (A), (M) sont constituées à 100 pour-cent en poids et la couche (I) à 60-100 pour-cent en poids, de manière préférentielle à 70-90 pour-cent en poids, d'un ou plusieurs polymères du groupe comprenant les homopolymères du polypropylène (Homo-PP's), les copolymères statistiques du polypropylène (Random-Co-PP's), les copolymères en bloc du polypropylène, les homopolymères flexibles du polypropylène (FPO's), les copolymères flexibles du polypropylène (Co-FPO's), alors que la couche (I), conjointement, est constituée à 40 à 0 pour-cent en poids, de manière préférentielle à 30 à 10 pour-cent en poids, de styrène-éthylène/butylène-styrène-copolymère en bloc (SEBS).

16. Feuille multicouche selon une ou plusieurs des revendications qui précèdent, **caractérisée en ce qu'**elle est constituée de cinq couches selon la séquence (A₁-M₁-A₂-M₂-I) ou (A₁-M₁-M₂-A₂-I) ou de sept couches selon la séquence (A₁-M₁-A₂-M₂-A₃-M₃-I), l'épaisseur de (M) et (A) étant la somme des couches (Mi), respectivement (Ai).

17. Procédé pour la fabrication d'une feuille multicouche selon une ou plusieurs des revendications qui précèdent, dans lequel les couches (A) à (I) sont co-extrudées ou doublées ensemble.

18. Procédé selon la revendication 19, **caractérisé en ce que** la feuille est co-extrudée sous la forme d'une feuille plate ou tubulaire, ou doublée sous la forme d'une feuille plate.

19. Utilisation d'une feuille selon les revendications 1 à 18 comme moyen d'emballage pour le remplissage ou le stockage de liquides parentéraux à base aqueuse.

20. Utilisation d'une feuille selon les revendications 1 à 18 en tant que moyen d'emballage pour le remplissage ou le stockage d'émulsions lipophiles liquides.
